# EUROPEAN PATENT APPLICATION

(11) **EP 3 331 227 A1**
(43) Date of publication of application: **06.06.2018**
(21) Application number: 15899746.0
(22) Date of filing: 21.10.2015
(51) Int. Cl.: H04M 1/725, G06F 3/048, G06K 9/00, G06Q 30/06, G06Q 30/02

(54) **MOBILE TERMINAL AND METHOD FOR CONTROLLING SAME**

(30) Priority: 30.07.2015 KR 20150108261; 06.08.2015 KR 20150111170
(71) Applicant: LG Electronics Inc., Yeongdeungpo-gu Seoul 07336 (KR)
(72) Inventor: CHO, Taehoon, Seoul 06772 (KR); SEOL, Jie, Seoul 06772 (KR); HAN, Dongsu, Seoul 06772 (KR); CHOI, Younhwa, Seoul 06772 (KR); EIM, Sanghyun, Seoul 06772 (KR); SONG, Hyewon, Seoul 06772 (KR); PARK, Mihyun, Seoul 06772 (KR)
(74) Representative: Beyer, Andreas
(86) International application number: PCT/KR2015/011110
(87) International publication number: WO 2017/018602

(57) **Abstract**

The present invention relates to a mobile terminal equipped with a camera and a method for controlling the same. The mobile terminal according to the present invention comprises: a display unit for outputting a preview image of a specific object in a camera photographing mode; and a control unit which enters a first mode for outputting a preview image obtained by focusing the specific object, on the basis of an input of a predetermined 1-1 user input in the camera photographing mode, and outputting information related to the specific object, on the basis of an input of a predetermined 1-2 user input; enters a second mode for, on the basis of an input of a predetermined second user input in the first mode, photographing the preview image and thereafter storing the photographed image and the information related to the specific object in a predetermined folder, and outputting a plurality of photographed images stored in the folder and information corresponding to each of the plurality of photographed images; and enters a third mode for, on the basis of an input of a predetermined third user input in the first mode, photographing the preview image and thereafter, outputting screen information for purchasing the specific object.

## Description

### BACKGROUND OF THE INVENTION

### 1. Field of the invention

The present disclosure relates to a mobile terminal provided with a camera and a control method thereof.

### 2. Description of the related art

Terminals may be classified into mobile/portable terminals and stationary terminals according to their mobility. Mobile terminals may also be classified as handheld terminals or vehicle mounted terminals according to whether or not a user can directly carry the terminal.

The functions of mobile terminals are diversified. For example, the functions may include data and voice communication, photographing and video shooting through a camera, voice recording, music file playback through a speaker system, and displaying an image or video on a display unit. Some terminals further include an electronic game play function or perform a multimedia player function. In particular, in recent years, mobile terminals may receive multicast signals that provide visual content such as broadcast, video or television programs.

As it becomes multifunctional, for example, such a terminal is allowed to capture still images or moving images, play music or video files, play games, receive broadcast and the like, so as to be implemented as an integrated multimedia player.

On the other hand, when a product is displayed through a camera provided in the terminal, there is an inconvenience that it is necessary to search an Internet site to check information related to the product or purchase the product.

In order to support and enhance the functions of the terminal, the improvement of structural or software elements of the terminal may be taken into consideration.

### SUMMARY OF THE INVENTION

The objective of the present disclosure is to solve the above-mentioned problems and other problems. Another object of the present disclosure is to provide a mobile terminal for storing product related information together with an image of a product or allowing a user to purchase a product, and a control method thereof.

In order to accomplish the foregoing and other objectives, according to an aspect of the present disclosure, there is provided a mobile terminal, including a display unit configured to display a preview image of a specific object in a camera photographing mode; and a controller configured to enter a first mode for displaying a preview image focused on the specific object based on a preset 1-1 user input being applied, and displaying information related to the specific object based on a preset 1-2 user input being applied in the camera photographing mode, and enter a second mode for capturing the preview image, and then storing the captured image and the information related to the specific object in a preset folder, and displaying a plurality of captured images stored in the folder and information corresponding to each of the plurality of captured images based on a preset second user input being applied in the first mode, and enter a third mode for capturing the preview image, and then displaying screen information for purchasing the specific object based on a preset third user input being applied in the first mode.

According to an embodiment, the controller may enter the first mode based on a touch input being applied to a region displayed with the specific object on the preview image of the specific object for a preset period of time in the camera photographing mode.

According to another embodiment, the controller may display price information on the specific object as information related to the specific object.

According to still another embodiment, the controller may display price information on the specific object produced in consideration of the current location of the terminal as information related to the specific object, and display a result of comparing price information disclosed in a site where the specific object is available for purchase and price information on the specific object based on a preset user input being applied.

According to yet still another embodiment, the controller may enter the second mode based on a touch input being applied to a photographing icon in the first mode.

According to still yet another embodiment, the controller may display price information on a plurality of objects included in each of the plurality of captured images as information corresponding to each of the plurality of captured images.

According to yet still another embodiment, the controller may enter the third mode based on the authentication of a fingerprint input to the fingerprint input unit in the first mode.

According to still yet another embodiment, the controller may display a preview image focused on the specific object and information related to the specific object in a first region of the display unit, and enter a fourth mode in which a plurality of captured images stored in the folder and information corresponding to each of the plurality of captured images are displayed in a second region of the display unit based on a preset fourth user input being applied in the camera photographing mode.

According to yet still another embodiment, the controller may capture the preview image, and then store the captured image and information related to the specific object in the folder, and display them in a second region of the display unit based on a preset fifth user input being applied in the fourth mode.

According to still yet another embodiment, the controller may display a total sum of price information on a plurality of objects included in each of the plurality of captured images stored in the folder along with price information on the specific object in a first region of the display unit.

According to yet still another embodiment, the controller may display screen information for purchasing the plurality of objects based on a preset sixth user input being applied in the fourth mode.

According to still yet another embodiment, the controller may capture a user, and then produce information related to the user from the captured image based on a preset seventh user input being applied in the first mode, and display information related to the specific object produced based on the information related to the user.

According to yet still another embodiment, the controller may capture the user's face, and produce at least one of the user's age, gender and emotional state from the captured image as information related to the user based on the preset seventh user input being applied in the first mode.

According to still yet another embodiment, the controller may display visual information corresponding to a preset event based on the occurrence of the preset event in association with the specific object in the second mode.

In addition, according to another aspect of the present disclosure, there is provided a method of controlling a mobile terminal, and the method may include (a) entering a first mode for displaying a preview image focused on a specific object based on a preset 1-1 user input being applied, and displaying information related to the specific object based on a preset 1-2 user input being applied in a camera photographing mode; (b) entering a second mode for capturing the preview image, and then storing the captured image and the information related to the specific object in a preset folder, and displaying a plurality of captured images stored in the folder and information corresponding to each of the plurality of captured images based on a preset second user input being applied in the first mode; and (c) entering a third mode for capturing the preview image, and then displaying screen information for purchasing the specific object based on a preset third user input being applied in the first mode.

According to an embodiment, the step (a) may include entering the first mode based on a touch input being applied to a region displayed with the specific object on the preview image of the specific object for a preset period of time in the camera photographing mode.

According to another embodiment, the step (a) may include displaying price information on the specific object as information related to the specific object.

According to still another embodiment, the step (b) may include entering the second mode based on a touch input being applied to a photographing icon in the first mode.

According to yet still another embodiment, the step (c) may include entering the third mode based on the authentication of a fingerprint input to the fingerprint input unit in the first mode.

According to still yet another embodiment, the step (b) may include displaying visual information corresponding to a preset event based on the occurrence of the preset event in association with the specific object in the second mode.

The effects of a mobile terminal according to the present disclosure and a control method thereof will be described as follows.

According to at least one of the embodiments of the present disclosure, there is an advantage that it is possible to confirm and then store product related information or purchase a product with an easy and quick input method.

According to at least one of the embodiments of the present disclosure, there is an advantage that product information produced by recognizing a user's face in consideration of the user's age, gender, and preferences can be recommended.

According to at least one of the embodiments of the present disclosure, there is an advantage that when the purchase of a good is completed or information related to the good is changed, it can be easily confirmed.

According to at least one of the embodiments of the present invention, there is an advantage that a product that can be purchased can be recommended based on the current position of the terminal.

For another embodiment, there is an advantage that a product to be purchased can be conveniently searched by a gesture such as scanning store shelves.

Further scope of applicability of the present disclosure will become apparent from the detailed description given hereinafter. However, it should be understood that the detailed description and specific examples such as preferred embodiments of the invention are given by way of illustration only, since various changes and modifications within the spirit and scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1A is a block diagram for explaining a mobile terminal associated with the present disclosure;
FIGS. 1B and 1C are conceptual views illustrating an example in which a mobile terminal associated with the present disclosure is seen from different directions;
FIG. 2 is a flowchart for explaining a method of controlling a mobile terminal according to the present disclosure;
FIG. 3 is a conceptual view for explaining an embodiment in which product related information is displayed;
FIG. 4 is a conceptual view for explaining an embodiment in which a product image and product related information are stored;
FIG. 5 is a conceptual view for explaining an embodiment in which a product purchase screen is displayed;
FIG. 6 is a conceptual view for explaining an embodiment in which product related information and a folder in which a product is stored are displayed on a divided screen;
FIG. 7 is a conceptual view for explaining an embodiment illustrating a process of storing a product in a folder;
FIGS. 8A and 8B are conceptual views for explaining an embodiment for selecting a product desired to be purchased from a plurality of products;
FIG. 9 is a conceptual view for explaining an embodiment in which user-based product related information is displayed;
FIG. 10 is a conceptual view for explaining another embodiment in which a product image and product related information are stored;
FIG. 11 is a conceptual view for explaining an embodiment in which an image of a product selected from a plurality of products and product related information are stored;
FIGS. 12A and 12B are conceptual views for explaining an embodiment in which product related information enters a payment mode after being displayed;
FIG. 13 is a conceptual view for explaining another embodiment in which product related information is displayed;
FIGS. 14 and 15 are conceptual diagrams for explaining an embodiment for confirming product related information prior to storing a product;
FIG. 16 is a conceptual view for explaining an embodiment for confirming product related information subsequent to storing a product;
FIG. 17 is a conceptual view for explaining an embodiment for displaying price information of a product disclosed on a site and a result of comparing the price information of the product;
FIG. 18 is a conceptual view for explaining an embodiment in which a product is recommended according to a result of analyzing a user;
FIG. 19 is a conceptual view for explaining an embodiment in which a product is stored according to a result of analyzing a user;
FIG. 20 is a conceptual view for explaining an embodiment in which a product review is registered according to a result of analyzing a user;
FIG. 21 is a conceptual view for explaining an embodiment in which a product review is shown according to a result of analyzing a user;
FIG. 22 is a conceptual view for explaining an embodiment of a wish list folder;
FIGS. 23 and 24 are conceptual views for explaining an embodiment of a wish list folder according to the occurrence of a product purchase event;
FIG. 25 is a conceptual view for explaining an embodiment of a purchase list folder according to the occurrence of a product purchase event;
FIG. 26 is a conceptual view for explaining an embodiment of screen switching between a wish list folder and a purchase list folder;
FIG. 27 is a conceptual view for explaining an embodiment in which a price comparison notification message is displayed according to the occurrence of a product purchase event;
FIG. 28 is a conceptual view for explaining an embodiment in which an icon corresponding to a wish list folder is displayed according to the occurrence of a product store event;
FIG. 29 is a conceptual view for explaining an embodiment for setting an event desired to receive a notification;
FIG. 30 is a conceptual view for explaining an embodiment in which product information is updated according to the occurrence of an event in which product information is changed;
FIG. 31 is a conceptual view for explaining an embodiment in which an image of a product available for purchase at a mart is displayed when a terminal is located near the mart;
FIG. 32 is a conceptual view for explaining an embodiment in which a notification message window for notifying that a product available for purchase at a mart exists within a wish list folder is displayed when a terminal is located near the mart;
FIG. 33 is a conceptual view for explaining an embodiment in which a method of displaying an icon corresponding to a wish list folder is changed according to a location change of a terminal;
FIG. 34 is a conceptual view for explaining an embodiment for entering product information and then scanning product shelves with a camera to detect a location of a product to be purchased;
FIG. 35 is a conceptual view for explaining an embodiment for selecting a product within a wish list folder and then scanning product shelves with a camera to detect a location of a product to be purchased;
FIG. 36 is a conceptual view for explaining an embodiment for entering product information with a voice and then scanning product shelves with a camera to detect a location of a product to be purchased;
FIG. 37 is a conceptual view for explaining an embodiment in which a product purchase statement is displayed;
FIG. 38 is a conceptual diagram for explaining an embodiment storing a product to be purchased periodically in a wish list folder; and
FIG. 39 is a conceptual view for explaining an embodiment of grouping products in a wish list folder.

### DETAILED DESCRIPTION OF THE INVENTION

Hereinafter, the embodiments disclosed herein will be described in detail with reference to the accompanying drawings, and the same or similar elements are designated with the same numeral references regardless of the numerals in the drawings and their redundant description will be omitted. A suffix "module" and "unit" used for constituent elements disclosed in the following description is merely intended for easy description of the specification, and the suffix itself does not give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings.

Mobile terminals described herein may include cellular phones, smart phones, laptop computers, digital broadcasting terminals, personal digital assistants (PDAs), portable multimedia players (PMPs), navigators, slate PCs, tablet PCs, ultra books, wearable devices (for example, smart watches, smart glasses, head mounted displays (HMDs)), and the like.

However, it may be easily understood by those skilled in the art that the configuration according to the exemplary embodiments of this specification can also be applied to stationary terminals such as digital TV, desktop computers and the like, excluding a case of being applicable only to the mobile terminals.

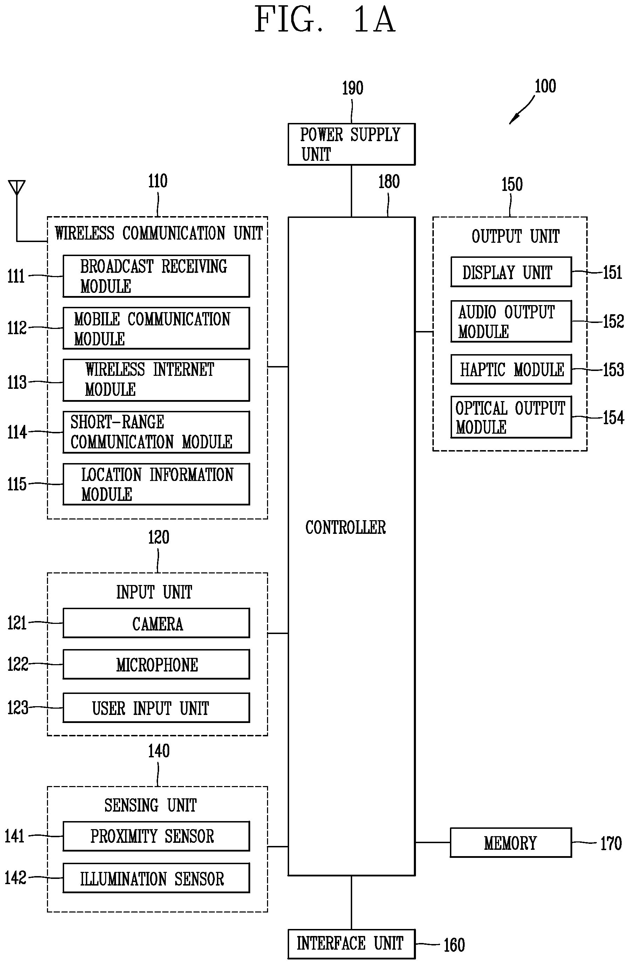

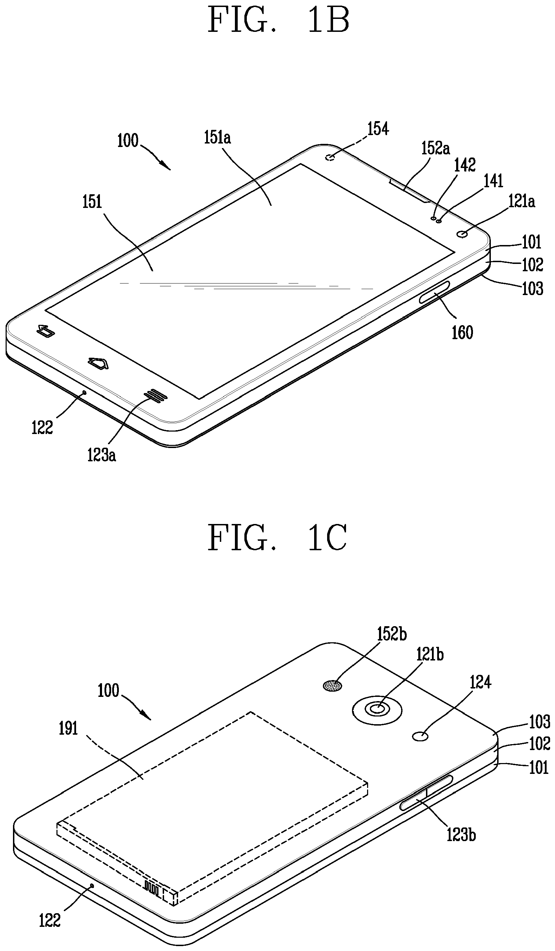

Referring to FIGS. 1A through 1C, FIG. 1A is a block diagram of a mobile terminal in accordance with the present disclosure, FIGS. 1B and 1C are conceptual views of one example of the mobile terminal, viewed from different directions.

The mobile terminal 100 may include components, such as a wireless communication unit 110, an input unit 120, a sensing unit 140, an output unit 150, an interface unit 160, a memory 170, a controller 180, a power supply unit 190 and the like. FIG. 1A illustrates the mobile terminal having various components, but it may be understood that implementing all of the illustrated components is not a requirement. Greater or fewer components may alternatively be implemented.

In more detail, the wireless communication unit 110 of those components may typically include one or more modules which permit wireless communications between the mobile terminal 100 and a wireless communication system, between the mobile terminal 100 and another mobile terminal 100, or between the mobile terminal 100 and an external server. In addition, the wireless communication unit 110 may include one or more modules for connecting the mobile terminal 100 to one or more networks.

The wireless communication unit 110 may include at least one of a broadcast receiving module 111, a mobile communication module 112, a wireless Internet module 113, a short-range communication module 114, a location information module 115 and the like.

The input unit 120 may include a camera 121 for inputting an image signal, a microphone 122 or an audio input module for inputting an audio signal, or a user input unit 123 (for example, a touch key, a push key (or a mechanical key), etc.) for allowing a user to input information. Audio data or image data collected by the input unit 120 may be analyzed and processed by a user's control command.

The sensing unit 140 may include at least one sensor which senses at least one of internal information of the mobile terminal, a surrounding environment of the mobile terminal and user information. For example, the sensing unit 140 may include a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, refer to the camera 121), a microphone 122, a battery gage, an environment sensor (for example, a barometer, a hygrometer, a thermometer, a radiation detection sensor, a thermal sensor, a gas sensor, etc.), and a chemical sensor (for example, an electronic nose, a health care sensor, a biometric sensor, etc.). On the other hand, the mobile terminal 100 disclosed herein may be configured to utilize information obtained from sensing unit 140, and in particular, information obtained from one or more sensors of the sensing unit 140, and combinations thereof.

The output unit 150 may be configured to output an audio signal, a video signal or a tactile signal. The output unit 150 may include a display unit 151, an audio output unit 152, a haptic module 153, an optical output unit 154 and the like. The display unit 151 may have an inter-layered structure or an integrated structure with a touch sensor in order to facilitate a touch screen. The touch screen may provide an output interface between the mobile terminal 100 and a user, as well as functioning as the user input unit 123 which provides an input interface between the mobile terminal 100 and the user.

The interface unit 160 may serve as an interface with various types of external devices connected with the mobile terminal 100. The interface unit 160, for example, may include wired or wireless headset ports, external power supply ports, wired or wireless data ports, memory card ports, ports for connecting a device having an identification module, audio input/output (I/O) ports, video I/O ports, earphone ports, or the like. The mobile terminal 100 may execute an appropriate control associated with a connected external device, in response to the external device being connected to the interface unit 160.

In addition, the memory 170 stores data that support various functions of the mobile terminal 100. The memory 170 is typically implemented to store data to support various functions or features of the mobile terminal 100. For instance, the memory 170 may be configured to store application programs executed in the mobile terminal 100, data or instructions for operations of the mobile terminal 100, and the like. At least some of those application programs may be downloaded from an external server via wireless communication. Some others of those application programs may be installed within the mobile terminal 100 at the time of being shipped for basic functions of the mobile terminal 100 (for example, receiving a call, placing a call, receiving a message, sending a message, etc.). On the other hand, the application programs may be stored in the memory 170, installed in the mobile terminal 100, and executed by the controller 180 to perform an operation (or a function) of the mobile terminal 100.

The controller 180 may typically control an overall operation of the mobile terminal 100 in addition to the operations associated with the application programs. The controller 180 may provide or process information or functions appropriate for a user in a manner of processing signals, data, information and the like, which are input or output by the aforementioned components, or activating the application programs stored in the memory 170.

Furthermore, the controller 180 may control at least part of the components illustrated in FIG. 1A, in order to drive the application programs stored in the memory 170. In addition, the controller 180 may drive the application programs by combining at least two of the components included in the mobile terminal 100 for operation.

The power supply unit 190 may receive external power or internal power and supply appropriate power required for operating respective elements and components included in the mobile terminal 100 under the control of the controller 180. The power supply unit 190 may include a battery, and the battery may be an embedded battery or a replaceable battery.

At least part of those elements and components may be combined to implement operation and control of the mobile terminal or a control method of the mobile terminal according to various exemplary embodiments described herein. Furthermore, the operation and control or the control method of the mobile terminal may be implemented in the mobile terminal in such a manner of activating at least one application program stored in the memory 170.

Hereinafter, each aforementioned component will be described in more detail with reference to FIG. 1A, prior to explaining various exemplary embodiments implemented by the mobile terminal 100 having the configuration.

First, the wireless communication unit 110 will be described. The broadcast receiving module 111 of the wireless communication unit 110 may receive a broadcast signal and/or broadcast associated information from an external broadcast managing entity via a broadcast channel. The broadcast channel may include a satellite channel and/or a terrestrial channel. At least two broadcast receiving modules 111 may be provided in the portable electronic device 100 to simultaneously receive at least two broadcast channels or switch the broadcast channels.

The mobile communication module 112 may transmit/receive wireless signals to/from at least one of network entities, for example, a base station, an external terminal, a server, and the like, on a mobile communication network, which is constructed according to technical standards or transmission methods for mobile communications (for example, Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), Long Term Evolution (LTE), Long Term Evolution-Advanced (LTE-A), etc.)

Here, the wireless signals may include audio call signal, video (telephony) call signal, or various formats of data according to transmission/reception of text/multimedia messages.

The wireless Internet module 113 refers to a module for supporting wireless Internet access, and may be built-in or externally installed on the mobile terminal 100. The wireless Internet module 113 may transmit and/or receive wireless signals via communication networks according to wireless Internet technologies.

Examples of such wireless Internet access may include Wireless LAN (WLAN), Wireless-Fidelity (Wi-Fi), Wireless Fidelity Direct (Wi-Fi Direct), Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), LTE (Long Term Evolution), LTE-A (Long Term Evolution-Advanced), and the like. The wireless Internet module 113 may transmit/receive data according to at least one wireless Internet technology within a range including even Internet technologies which are not aforementioned.

From the perspective that the wireless Internet accesses according to Wibro, HSDPA, GSM, CDMA, WCDMA, LET and the like are executed via a mobile communication network, the wireless Internet module 113 which performs the wireless Internet access via the mobile communication network may be understood as a type of the mobile communication module 112.

The short-range communication module 114 denotes a module for short-range communications. Suitable technologies for implementing the short-range communications may include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, and the like. The short-range communication module 114 may support wireless communications between the mobile terminal 100 and a wireless communication system, between the mobile terminal 100 and another mobile terminal 100, or between the mobile terminal and a network where another mobile terminal 100 (or an external server) is located, via wireless personal area networks. The short-range communication module 114 denotes a module for short-range communications.

Here, the another mobile terminal 100 may be a wearable device, for example, a smart watch, smart glasses or a head mounted display (HMD), which is able to exchange data with the mobile terminal 100 (or to like data with the mobile terminal 100). The short-range communication module 114 may sense (recognize) a wearable device, which is able to communicate with the mobile terminal), near the mobile terminal 100. In addition, when the sensed wearable device is a device which is authenticated to communicate with the mobile terminal 100 according to the present disclosure, the controller 180 may transmit at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. For example, when the mobile terminal uses the GPS module, a position of the mobile terminal may be acquired using a signal sent from a GPS satellite. As another example, when the mobile terminal uses the Wi-Fi module, a position of the mobile terminal may be acquired based on information associated with a wireless access point (AP) which transmits or receives a wireless signal to or from the Wi-Fi module. According to the need, the location information module 115 may perform any function of the other modules of the wireless communication unit 110 to obtain data on the location of the mobile terminal. As a module used to acquire the location (or current location) of the mobile terminal, the location information module 115 may not be necessarily limited to a module for directly calculating or acquiring the location of the mobile terminal.

The input unit 120 may be configured to provide an audio or video signal (or information) input to the mobile terminal or information input by a user to the mobile terminal. For the input of the audio information, the mobile terminal 100 may include one or a plurality of cameras 121. The camera 121 processes a image frame, such as still picture or video, obtained by an image sensor in a video phone call or image capturing mode. The processed image frames may be displayed on the display unit 151. On the other hand, the plurality of cameras 121 disposed in the mobile terminal 100 may be arranged in a matrix configuration. By use of the cameras 121 having the matrix configuration, a plurality of image information having various angles or focal points may be input into the mobile terminal 100. As another example, the cameras 121 may be located in a stereoscopic arrangement to acquire left and right images for implementing a stereoscopic image.

The microphone 122 may process an external audio signal into electric audio data. The processed audio data may be utilized in various manners according to a function being executed in the mobile terminal 100 (or an application program being executed). On the other hand, the microphone 122 may include assorted noise removing algorithms to remove noise generated in the course of receiving the external audio signal.

The user input unit 123 may receive information input by a user. When information is input through the user input unit 123, the controller 180 may control an operation of the mobile terminal 100 to correspond to the input information. The user input unit 123 may include a mechanical input element (or a mechanical key, for example, a button located on a front/rear surface or a side surface of the mobile terminal 100, a dome switch, a jog wheel, a jog switch, etc.), and a touch-sensitive input means. As one example, the touch-sensitive input means may be a virtual key, a soft key or a visual key, which is displayed on a touch screen through software processing, or a touch key which is disposed on a portion except for the touch screen. On the other hand, the virtual key or the visual key may be displayable on the touch screen in various shapes, for example, graphic, text, icon, video or a combination thereof.

On the other hand, the sensing unit 140 may sense at least one of internal information of the mobile terminal, surrounding environment information of the mobile terminal and user information, and generate a sensing signal corresponding to it. The controller 180 may control an operation of the mobile terminal 100 or execute data processing, a function or an operation associated with an application program installed in the mobile terminal based on the sensing signal. Hereinafter, description will be given in more detail of representative sensors of various sensors which may be included in the sensing unit 140.

First, a proximity sensor 141 refers to a sensor to sense presence or absence of an object approaching to a surface to be sensed, or an object disposed near a surface to be sensed, by using an electromagnetic field or infrared rays without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 may sense proximity of a pointer to the touch screen by changes of an electromagnetic field, which is responsive to an approach of an object with conductivity. In this case, the touch screen (touch sensor) may also be categorized as a proximity sensor.

On the other hand, for the sake of brief explanation, a state that the pointer is positioned to be proximate onto the touch screen without contact will be referred to as 'proximity touch, whereas a state that the pointer substantially comes in contact with the touch screen will be referred to as 'contact touch.' For the position corresponding to the proximity touch of the pointer on the touch screen, such position will correspond to a position where the pointer faces perpendicular to the touch screen upon the proximity touch of the pointer. The proximity sensor 141 may sense proximity touch, and proximity touch patterns (e.g., distance, direction, speed, time, position, moving state, etc.). On the other hand, the controller 180 may process data (or information) corresponding to the proximity touches and the proximity touch patterns sensed by the proximity sensor 141, and output visual information corresponding to the process data on the touch screen. In addition, the controller 180 may control the mobile terminal 100 to execute different operations or process different data (or information) according to whether a touch with respect to the same point on the touch screen is either a proximity touch or a contact touch.

A touch sensor may sense a touch (or touch input) applied onto the touch screen (or the display unit 151) using at least one of various types of touch methods, such as a resistive type, a capacitive type, an infrared type, a magnetic field type, and the like.

As one example, the touch sensor may be configured to convert changes of pressure applied to a specific part of the display unit 151 or a capacitance occurring from a specific part of the display unit 151, into electric input signals. Also, the touch sensor may be configured to sense not only a touched position and a touched area, but also touch pressure. Here, the touch object body may be a finger, a touch pen or stylus pen, a pointer, or the like as an object through which a touch is applied to the touch sensor.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180 or the controller 180 itself.

On the other hand, the controller 180 may execute a different control or the same control according to a type of an object which touches the touch screen (or a touch key provided in addition to the touch screen). Whether to execute the different control or the same control according to the object which gives a touch input may be decided based on a current operating state of the mobile terminal 100 or a currently executed application program.

On the other hand, the touch sensor may be formed to sense a touch input using a different scheme in an active or inactive state of the display unit 151. At this time, the different scheme may be associated with an active period of the touch sensor. More specifically, the touch sensor may be activated with a different period according to whether or not the display unit 151 is activated. In other words, the touch sensor may have a different active period according to whether or not the display unit 151 is activated to sense a touch input applied to the touch sensor.

For example, when the display unit 151 is in an inactive state, the touch sensor may be activated with a preset specific period. In this case, the specific period may be a period corresponding to a time greater than zero. Furthermore, when the display unit 151 is in an active state, the touch sensor may be always operated in an active state. In other words, in this case, an activated period of the touch sensor may be a period having a time zero or very close to zero.

Whether or not the touch sensor is activated may be determined using the power consumption of the touch sensor. For example, the touch sensor may correspond to an inactive state when the power consumption of the touch sensor is less than a preset reference value based on zero, and may be referred to as an active state when the power consumption of the touch sensor is greater than a preset reference value based on zero.

When the display unit 151 is in an active state (hereinafter, referred to as an "active mode"), the touch sensor may continuously maintain the active state, and wait form the application of a touch input to the display unit 151. On the contrary, when the display unit 151 is in an inactive state (hereinafter, referred to as a "doze mode"), the touch sensor may be activated for each a preset specific period.

On the other hand, as reducing a specific period in which the touch sensor is activated, a speed for sensing a touch input hitting the display unit 151 may increase, but accordingly power consumed by the touch sensor may also increase. On the contrary, as increasing the period in which the touch sensor is activated, a speed for sensing a touch input hitting the display unit 151 may decrease though power consumed by the touch sensor decreases.

Accordingly, the specific period may be set to enhance the efficiency of power consumption while the sensing speed is fast enough to the extent that cannot be recognized by the user in sensing a touch input hitting the display unit 151. For example, the specific period may be set such that the touch sensor is inactive and then active 20 times (Hz) per second.

On the other hand, while the display unit 151 is in an active state, the touch sensor may be also activated, and the active period (T) in an active state may be zero or very close to zero. Otherwise, the period of the touch sensor while the touch sensor is in an active state may be shorter several times than a specific period set to activate the touch sensor while the display unit 151 is in an inactive state. In other words, the touch sensor may be activated for a different period of time according to whether or not the display unit 151 is activated.

On the other hand, when a preset touch input (for example, a first and a second touch input consecutively hitting a predetermined region within a reference period of time) is sensed by the touch sensor in a doze mode in which the display unit 151 is deactivated and the touch sensor is periodically activated, the controller 180 may switch the doze mode to an active mode in which the display unit and touch sensor are activated.

In addition, the touch sensor may be driven with a different period based on the state of the display unit 151. For example, the touch sensor may execute a doze mode when the display unit 151 is in a closed state, and execute an active mode when switching from the closed state to an open state.

Meanwhile, the touch sensor and the proximity sensor may be executed individually or in combination, to sense various types of touches, such as a short (or tap) touch, a long touch, a multi-touch, a drag touch, a flick touch, a pinch-in touch, a pinch-out touch, a swype touch, a hovering touch, and the like.

An ultrasonic sensor may be configured to recognize position information relating to a sensing object by using ultrasonic waves. The controller 180 may calculate a position of a wave generation source based on information sensed by an illumination sensor and a plurality of ultrasonic sensors. Since light is much faster than ultrasonic waves, a time for which the light reaches the optical sensor may be much shorter than a time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 constructing the input unit 120 may be a type of camera sensor. The camera sensor may include at least one of a photo sensor (or image sensor) and a laser sensor.

Implementing the camera 121 with a laser sensor may allow detection of a touch of a physical object with respect to a 3D stereoscopic image. The camera 121 and the laser sensor may be combined to detect a touch of the sensing object with respect to a 3D stereoscopic image. More specifically, the photo sensor is integrated with photo diodes and transistors in the rows and columns thereof, and a content placed on the photo sensor may be scanned by using an electrical signal that is changed according to the amount of light applied to the photo diode. Namely, the photo sensor may calculate the coordinates of the sensing object according to variation of light to thus obtain position information of the sensing object.

The display unit 151 may display (output) information processed in the mobile terminal 100. For example, the display unit 151 may display execution screen information of an application program driven in the mobile terminal 100 or user interface (UI) and graphic user interface (GUI) information in response to the execution screen information.

Furthermore, the display unit 151 may also be implemented as a stereoscopic display unit for displaying stereoscopic images.

The stereoscopic display unit may employ a stereoscopic display scheme such as stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. Also, the audio output unit 152 may also provide audible output signals associated with a particular function (e.g., a call signal reception sound, a message reception sound, etc.) carried out by the mobile terminal 100. The audio output module 152 may include a receiver, a speaker, a buzzer or the like.

A haptic module 153 may generate various tactile effects the that user may feel. A typical example of the tactile effect generated by the haptic module 153 may be vibration. Strength, pattern and the like of the vibration generated by the haptic module 153 may be controllable by a user selection or setting of the controller. For example, the haptic module 153 may output different vibrations in a combining manner or a sequential manner.

Besides vibration, the haptic module 153 may generate various other tactile effects, including an effect by stimulation such as a pin arrangement vertically moving with respect to a contact skin, a spray force or suction force of air through a jet orifice or a suction opening, a touch on the skin, a contact of an electrode, electrostatic force, etc., an effect by reproducing the sense of cold and warmth using an element that can absorb or generate heat, and the like.

The haptic module 153 may be configured to transmit tactile effects through a user's direct contact, or a user's muscular sense using a finger or a hand. Two or more haptic modules 153 may be provided according to the particular configuration of the mobile terminal 100.

An optical output module 154 may output a signal for indicating an event generation using light of a light source. Examples of events generated in the mobile terminal 100 may include a message reception, a call signal reception, a missed call, an alarm, a schedule notice, an email reception, an information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device may be connected with the terminal 100 via the interface unit 160.

Furthermore, when the mobile terminal 100 is connected with an external cradle, the interface unit 160 may serve as a passage to allow power from the cradle to be supplied to the mobile terminal 100 therethrough or may serve as a passage to allow various command signals input by the user from the cradle to be transferred to the mobile terminal therethrough. Such various command signals or power inputted from the cradle may operate as signals for recognizing that the mobile terminal 100 has accurately been mounted to the cradle.

The memory 170 can store programs to support operations of the controller 180 and store input/output data (for example, phonebook, messages, still images, videos, etc.). The memory 170 may store data associated with various patterns of vibrations and audio which are output in response to touch inputs on the touch screen.

The memory 170 may include at least one type of storage medium including a Flash memory, a hard disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 170 over the Internet.

As aforementioned, the controller 180 may typically control the general operations of the mobile terminal 100. For example, the controller 180 may set or release a lock state for restricting a user from inputting a control command with respect to applications when a state of the mobile terminal meets a preset condition.

Furthermore, the controller 180 may also perform controlling and processing associated with voice calls, data communications, video calls, and the like, or perform pattern recognition processing to recognize a handwriting input or a picture drawing input performed on the touch screen as characters or images, respectively. In addition, the controller 180 may control one or combination of those components in order to implement various exemplary embodiment disclosed herein on the mobile terminal 100.

The power supply unit 190 may receive external power or internal power and supply appropriate power required for operating respective elements and components included in the electronic device 100 under the control of the controller 180. The power supply unit 190 may include a battery, which is typically rechargeable or be detachably coupled to the terminal body for charging.

Furthermore, the power supply unit 190 may include a connection port. The connection port may be configured as one example of the interface unit 160 to which an external (re)charger for supplying power to recharge the battery is electrically connected.

As another example, the power supply unit 190 may be configured to recharge the battery in a wireless manner without use of the connection port. Here, the power supply unit 190 may receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable or its similar medium using, for example, software, hardware, or any combination thereof.

Referring to FIGS. 1B and 1C, the mobile terminal 100 disclosed herein may be provided with a bar-type terminal body. However, the present disclosure may not be necessarily limited to this, and may be also applicable to various structures such as a watch type, a clip type, a glasses type, a folder type in which two or more bodies are coupled to each other in a relatively movable manner, a slide type, a swing type, a swivel type, and the like. The description in association with a specific type of mobile terminal or on a specific type of mobile terminal will be also typically applied to another type of mobile terminal.

Here, the terminal body may be understood as a conception which indicates the mobile terminal 100 as at least one assembly.

The mobile terminal 100 may include a case (for example, a frame, a housing, a cover, etc.) constituting the appearance thereof. In this embodiment, the case may be divided into a front case 101 and a rear case 102. Various electronic components may be incorporated into a space formed between the front case 101 and the rear case 102. At least one middle case may be additionally disposed between the front case 101 and the rear case 102

A display unit 151 may be disposed on a front surface of the terminal body to output information. As illustrated, a window 151a of the display unit 151 may be mounted to the front case 101 so as to form the front surface of the terminal body together with the front case 101.

In some cases, electronic components may also be mounted to the rear case 102. Examples of those electronic components mounted to the rear case 102 may include a detachable battery, an identification module, a memory card and the like. Here, a rear cover 103 for covering the electronic components mounted may be detachably coupled to the rear case 102. Therefore, when the rear cover 103 is detached from the rear case 102, the electronic components mounted to the rear case 102 may be externally exposed.

As illustrated, when the rear cover 103 is coupled to the rear case 102, a side surface of the rear case 102 may be partially exposed. In some cases, upon the coupling, the rear case 102 may also be completely shielded by the rear cover 103. On the other hand, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

Unlike the example which the plurality of cases form an inner space for accommodating such various components, the mobile terminal 100 may be configured such that one case forms the inner space. In this example, a mobile terminal 100 having a uni-body formed in such a manner that synthetic resin or metal extends from a side surface to a rear surface may also be implemented.

On the other hand, the mobile terminal 100 may include a waterproofing unit (not shown) for preventing an introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 may include a display unit 151, first and second audio output modules 152a and 152b, a proximity sensor 141, an illumination sensor 152, an optical output module 154, first and second cameras 121a and 121b, first and second manipulation units 123a and 123b, a microphone 122, an interface unit 160 and the like.

Hereinafter, description will be given of an exemplary mobile terminal 100 that the display unit 151, the first audio output module 152a, the proximity sensor 141, the illumination sensor 142, the optical output module 154, the first camera 121a and the first manipulation unit 123a are disposed on the front surface of the terminal body, the second manipulation unit 123b, the microphone 122 and the interface unit 160 are disposed on a side surface of the terminal body, and the second audio output module 152b and the second camera 121b are disposed on a rear surface of the terminal body, with reference to FIGS. 1B and 1C.

However, the foregoing configuration may not be necessarily limited to the arrangement. The foregoing configuration may be excluded, substituted or disposed on another surface if necessary. For example, the first manipulation unit 123a may not be disposed on the front surface of the terminal body, and the second audio output module 152b may be disposed on the side surface other than the rear surface of the terminal body.

The display unit 151 may display (output) information processed in the mobile terminal 100. For example, the display unit 151 may display execution screen information of an application program driven in the mobile terminal 100 or user interface (UI) and graphic user interface (GUI) information in response to the execution screen information.

The display unit 151 may include at least one of a liquid crystal display (LCD), a thin film transistor-liquid crystal display (TFT-LCD), an organic light emitting diode (OLED), a flexible display, a 3-dimensional (3D) display, and an e-ink display.

The display unit 151 may be implemented in two or more in number according to a configured aspect of the mobile terminal 100. For instance, a plurality of the display units 151 may be arranged on one surface to be spaced apart from or integrated with each other, or may be arranged on different surfaces.

The display unit 151 may include a touch sensor which senses a touch onto the display unit so as to receive a control command in a touching manner. When a touch is input to the display unit 151, the touch sensor may be configured to sense this touch and the controller 180 may generate a control command corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

In this manner, the display unit 151 may form a flexible touch screen along with the touch sensor, and in this case, the touch screen may function as the user input unit 123 (refer to Figure 1A). Therefore, the touch screen may replace at least some of the functions of the first manipulation unit 123a.

The first audio output module 152a may be implemented in the form of a receiver for transferring voice sounds to the user's ear or a loud speaker for outputting various alarm sounds or multimedia reproduction sounds.

The window 151a of the display unit 151 may include a sound hole for emitting sounds generated from the first audio output module 152a. Here, the present disclosure may not be limited to this. It may also be configured such that the sounds are released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 may output light for indicating an event generation. Examples of the event generated in the electronic device 100 may include a message reception, a call signal reception, a missed call, an alarm, a schedule notice, an email reception, information reception through an application, and the like. When a user's event check is sensed, the controller 180 may control the optical output unit 154 to end the output of light.

The first camera 121a may process video frames such as still or moving images obtained by the image sensor in a video call mode or a capture mode. The processed video frames may be displayed on the display unit 151 or stored in the memory 170.

The first and second manipulation units 123a and 123b are examples of the user input unit 123, which may be manipulated by a user to input a command for controlling the operation of the mobile terminal 100. The first and second manipulation units 123a and 123b may employ any method if it is a tactile manner allowing the user to perform manipulation with a tactile feeling such as touch, push, scroll or the like. In addition, the first and second manipulation units 123a and 123b may also employ a method of allowing the user to perform manipulation without a tactile feeling through a proximity touch, a hovering touch, or the like.

The drawings are illustrated on the basis that the first manipulation unit 123a is a touch key, but the present disclosure may not be necessarily limited to this. For example, the first manipulation unit 123a may be configured with a mechanical key, or a combination of a touch key and a push key.

The content received by the first and second manipulation units 123a and 123b may be set in various ways. For example, the first manipulation unit 123a may be used by the user to input a command such as menu, home key, cancel, search, or the like, and the second manipulation unit 123b may be used by the user to input a command, such as controlling a volume level being output from the first or second audio output module 152a or 152b, switching into a touch recognition mode of the display unit 151, or the like.

On the other hand, as another example of the user input unit 123, a rear input unit (not shown) may be disposed on the rear surface of the terminal body. The rear input unit may be manipulated by a user to input a command for controlling an operation of the mobile terminal 100. The content input may be set in various ways. For example, the rear input unit may be used by the user to input a command, such as power on/off, start, end, scroll or the like, controlling a volume level being output from the first or second audio output module 152a or 152b, switching into a touch recognition mode of the display unit 151, or the like. The rear input unit may be implemented into a form allowing a touch input, a push input or a combination thereof.

The rear input unit may be disposed to overlap the display unit 151 of the front surface in a thickness direction of the terminal body. As one example, the rear input unit may be disposed on an upper end portion of the rear surface of the terminal body such that a user can easily manipulate it using a forefinger when the user grabs the terminal body with one hand. However, the present disclosure may not be limited to this, and the position of the rear input unit may be changeable.

When the rear input unit is disposed on the rear surface of the terminal body, a new user interface may be implemented using the rear input unit. Also, the aforementioned touch screen or the rear input unit may substitute for at least part of functions of the first manipulation unit 123a located on the front surface of the terminal body. Accordingly, when the first manipulation unit 123a is not disposed on the front surface of the terminal body, the display unit 151 may be implemented to have a larger screen.

On the other hand, the mobile terminal 100 may include a fingerprint recognition sensor for recognizing a user's fingerprint, and the controller 180 may use fingerprint information sensed through the finger recognition sensor as an authentication means. The finger scan sensor may be installed in the display unit 151 or the user input unit 123.

The microphone 122 may be formed to receive the user's voice, other sounds, and the like. The microphone 122 may be provided at a plurality of places, and configured to receive stereo sounds.

The interface unit 160 may serve as a path allowing the mobile terminal 100 to exchange data with external devices. For example, the interface unit 160 may be at least one of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b may be further mounted to the rear surface of the terminal body. The second camera 121b may have an image capturing direction, which is substantially opposite to the direction of the first camera unit 121a.

The second camera 121b may include a plurality of lenses arranged along at least one line. The plurality of lenses may also be arranged in a matrix configuration. The cameras may be referred to as an 'array camera. When the second camera 121b is implemented as the array camera, images may be captured in various manners using the plurality of lenses and images with better qualities may be obtained.

A flash 124 may be disposed adjacent to the second camera 121b. When an image of a subject is captured with the camera 121b, the flash 124 may illuminate the subject.

The second audio output module 152b may further be disposed on the terminal body. The second audio output module 152b may implement stereophonic sound functions in conjunction with the first audio output module 152a, and may be also used for implementing a speaker phone mode for call communication.

At least one antenna for wireless communication may be disposed on the terminal body. The antenna may be installed in the terminal body or formed on the case. For example, an antenna which configures a part of the broadcast receiving module 111 (see FIG. 1A) may be retractable into the terminal body. Alternatively, an antenna may be formed in a form of film to be attached onto an inner surface of the rear cover 103 or a case including a conductive material may serve as an antenna.

A power supply unit 190 (refer to FIG. 1A) for supplying power to the mobile terminal 100 may be disposed on the terminal body. The power supply unit 190 may include a batter 191 which is mounted in the terminal body or detachably coupled to an outside of the terminal body.

The battery 191 may receive power via a power source cable connected to the interface unit 160. Also, the battery 191 may be (re)chargeable in a wireless manner using a wireless charger. The wireless charging may be implemented by magnetic induction or electromagnetic resonance.

On the other hand, the drawing illustrates that the rear cover 103 is coupled to the rear case 102 for shielding the battery 191, so as to prevent separation of the battery 191 and protect the battery 191 from an external impact or foreign materials. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory may be a touch pen for assisting or extending a touch input onto a touch screen.

Hereinafter, embodiments associated with a control method which can be implemented in the mobile terminal having the foregoing configuration will be described with reference to the attached drawings. It should be understood by those skilled in the art that the present disclosure can be embodied in other specific forms without departing from the concept and essential characteristics thereof.

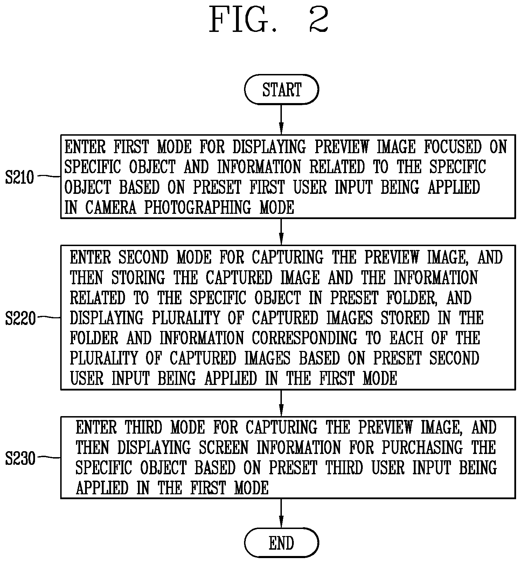

FIG. 2 is a flowchart for explaining a method of controlling a mobile terminal according to the present disclosure.

Referring to FIG. 2, first, the process (S210) of entering a first mode for displaying a preview image focused on a specific object and information related to the specific object based on a preset first user input being applied in the camera photographing mode is carried out.

Specifically, the process S210 may include a process of entering a first mode for displaying a preview image focused on a specific object based on a preset 1-1 user input being applied, and displaying information related to the specific object based on a preset 1-2 user input being applied in a camera photographing mode.

Subsequently, the process (S220) of entering a second mode for capturing the preview image, and then storing the captured image and information related to the specific object in a preset folder, and displaying a plurality of captured images stored in the folder and information corresponding to each of the plurality of captured images based on a preset second user input being applied in the first mode is carried out.

Next, the process (S230) of entering a third mode for capturing the preview image, and then displaying screen information for purchasing the specific object based on a preset third user input being applied in the first mode is carried out.

Specifically, the processes S220 and S230 may be sequentially or simultaneously carried out. In other words, in the first mode, whether or not the second user input or the third user input is applied is simultaneously or sequentially determined, and then the respective processes are carried out according to the result. For example, whether or not the third user input is applied may first be determined.

Hereinafter, a specific embodiment will be described.

For an embodiment, the controller 180 may enter the first mode based on a touch input being applied to a region displayed with the specific object on the preview image of the specific object for a preset period of time in the camera photographing mode.

For another embodiment, the controller 180 may display price information on the specific object as information related to the specific object.

For still another embodiment, the controller 180 may display price information on the specific object produced in consideration of the current location of the terminal as information related to the specific object, and display a result of comparing price information disclosed in a site where the specific object can be purchased and price information on the specific object based on a preset user input being applied.

For yet still another embodiment, the controller 180 may enter the second mode based on a touch input being applied to a photographing icon in the first mode.

For still yet another embodiment, the controller 180 may display price information on a plurality of objects included in each of the plurality of captured images as information corresponding to each of the plurality of captured images.

For yet still another embodiment, the controller 180 may enter the third mode based on a fingerprint entered to the fingerprint input unit being authenticated in the first mode.

For still yet another embodiment, the controller 180 may enter a fourth mode for displaying a preview image focused on the specific object and information related to the specific object in a first region of the display unit 151, and displaying a plurality of captured images stored in the folder and information corresponding to each of the plurality of captured images in a second region of the display unit 151 based on a preset fourth user input being applied in the camera photographing mode.

For yet still another embodiment, the controller 180 may capture the preview image, and then store the captured image and information related to the specific object in the folder and display them in a second region of the display unit 151 based on a preset fifth user input being applied in the fourth mode.

For still yet another embodiment, the controller 180 may display a total sum of price information on a plurality of objects included in each of the plurality of captured images stored in the folder together with price information on the specific object in a first region of the display unit 151.

For yet still another embodiment, the controller 180 may display screen information for purchasing the plurality of objects based on a preset sixth user input being applied in the fourth mode.

For still yet another embodiment, the controller 180 may capture a user, and then produce information related to the user from the captured image, and display information related to the specific object produced based on the information related to the user on the basis of a preset seventh user input being applied in the first mode.

For yet still another embodiment, the controller 180 may capture the user's face, and produce at least one of the user's age, gender and emotional state from the captured image as information related to the user based on the preset seventh user input being applied in the first mode.

Hereinafter, a specific embodiment will be described with reference to the drawings.

As described above, the controller 180 may enter the first mode based on a touch input being applied to a region displayed with the specific object on the preview image of the specific object for a preset period of time in the camera photographing mode.

Here, the controller 180 may display price information on the specific object as information related to the specific object.

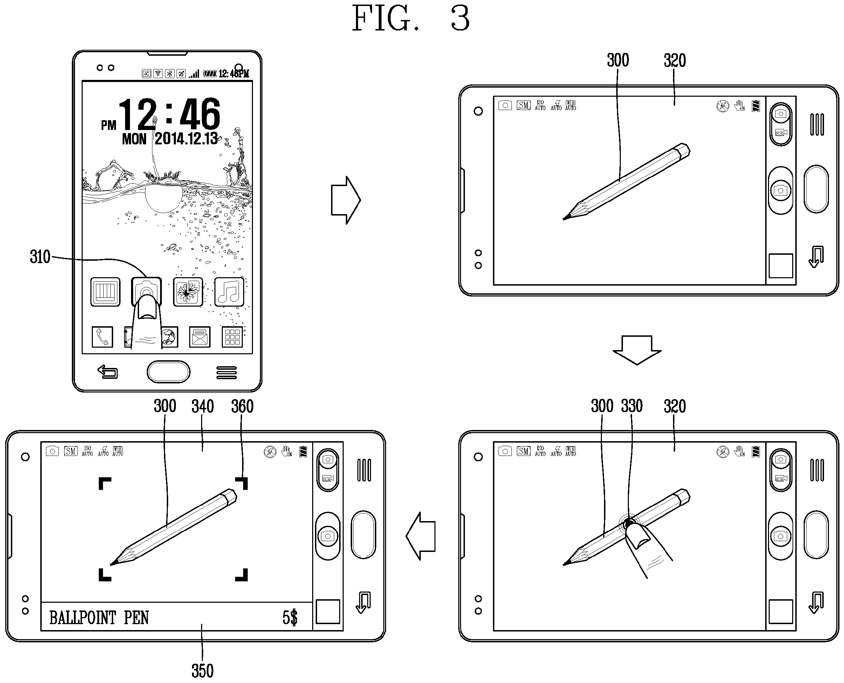

FIG. 3 is a conceptual view for explaining an embodiment in which product related information is displayed.

Referring to FIG. 3, when a touch input is applied to a camera icon 310 displayed on a home screen, a camera photographing mode may be executed. Accordingly, a preview image 320 may be displayed on the screen 151 by the camera 121 at present.

Specifically, the preview image 320 may denote an image displayed through the camera 121 prior to capturing, and the preview image 320 may include a specific object 300. For example, a preview image 320 of the ballpoint pen 300 may be displayed.

Subsequently, when a long touch input 330 is applied to a region in which the ballpoint pen 300 is displayed on the preview image 320 of the ballpoint pen 300, a preview image 340 focused on the ballpoint pen 300 and information 350 related to the ballpoint pen 300 may be displayed.

In other words, the long touch input 330 may be applied to a region on the preview image 320 in which the ballpoint pen 300 is displayed to enter a first mode (calling-dibs mode). In addition, as the ballpoint pen 300 is focused, a focusing frame 360 surrounding the ballpoint pen 300 may be displayed.

For an embodiment, the information 350 related to the ballpoint pen 300 may include the name, price, specification, and the like of the ballpoint pen 300. Here, the information 350 may be received from an external server or retrieved through a network communication network. Alternatively, the information 350 may be stored in the terminal 100.

For an embodiment related thereto, when the terminal 100 is located in a specific place, the information 350 may be received from an external server. Specifically, when the terminal 100 is located at the mart, price information of the ballpoint pen 300 that can be purchased at the mart may be received from an external server. Hereinafter, a more specific embodiment will be described later.

For another embodiment, when a touch input shorter than the long touch input 330 is applied to a region in which the ballpoint pen 300 is displayed on the preview image 320 of the ballpoint pen 300, only a preview image 340 focused on the ballpoint pen 300 may be displayed.

Specifically, when a user takes a finger to a region in which the ballpoint pen 300 is displayed from the preview image 320 of the ballpoint pen 300 to apply a touch input for a predetermined period of time, the preview image 340 focused on the ballpoint pen 300 may be displayed. Subsequently, after releasing the finger, a touch input may be applied to a photographing icon (photographing button) to capture the preview image 340 focused on the ballpoint pen 300.

On the contrary, when the user brings a finger to a region in which the ballpoint pen 300 is displayed from the preview image 320 of the ballpoint pen 300 to apply a touch input for a time longer than the predetermined time, the preview image 340 focused on the ballpoint pen 300 and information 350 related to the ballpoint pen 300 may be displayed together.

In other words, when the touch input is maintained even after the touch input is applied to a region in which the ballpoint pen 300 is displayed on the preview image 320 of the ballpoint pen 300 for a predetermined period of time to display the preview image 340 focused on the ballpoint pen 300, it enters the first mode in which the information 350 related to the ballpoint pen 300 is displayed together.

For an embodiment, the first mode may be referred to as a "calling-dibs mode" as a previous process of a second mode for storing information such as an image of an article to be purchased and a price related thereto.

For another embodiment, when a tap input is applied to a home button, a camera photographing mode may be carried out. Subsequently, when the finger for tapping the home button (fingerprint recognition unit) is not released, the price information 350 of the ballpoint pen 300 may be displayed.

For still another embodiment, when the user presses down a lower volume button on a rear surface of the terminal 100 for a long period of time, the camera photographing mode may be carried out. Then, when the user brings the finger to the home button (fingerprint recognition unit) to maintain the touched state, the price information 350 of the ballpoint pen 300 may be displayed.

On the other hand, the controller 180 may enter the second mode based on a touch input being applied to a photographing icon in the first mode.

At this time, the controller 180 may display price information on a plurality of objects included in each of the plurality of captured images as information corresponding to each of the plurality of captured images.

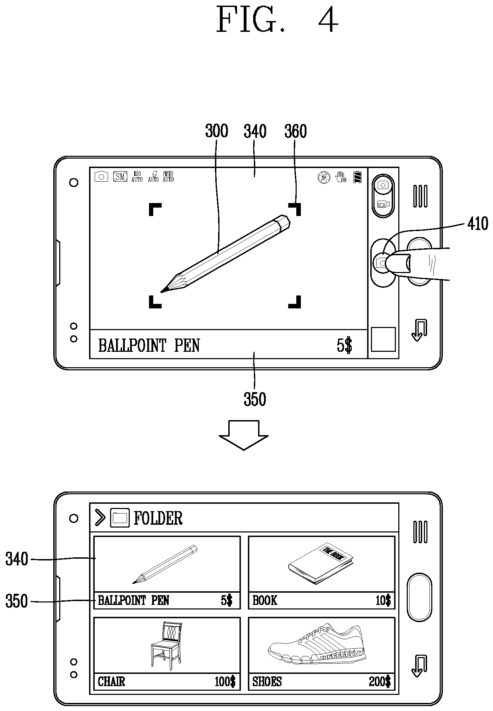

FIG. 4 is a conceptual view for explaining an embodiment in which a product image and product related information are stored.

Referring to FIG. 4, when a touch input is applied to a photographing icon 410 in the first mode, a preview image 340 focused on the ballpoint pen 300 may be captured. Accordingly, the preview image 340 of the ballpoint pen 300 and the information 350 related to the ballpoint pen 300 may be stored together in a preset folder.

Then, a plurality of captured images stored in the preset folder and information corresponding thereto may be displayed. In other words, screen information in which the folder is open may be displayed.

For an embodiment, the preview image 340 of the ballpoint pen 300 and the price information 350 of the ballpoint pen 300 stored most recently may be displayed first. In addition, a preview image of previously stored items and price information of each item may be displayed. At this time, when there are a plurality of stored preview images, the user may apply a scroll input or the like to confirm the list.

For another embodiment, the preset folder may be a folder included in a photo album (gallery), or may be a storage set in a separate application or memory.

On the other hand, the controller 180 may enter the third mode based on a fingerprint entered to the fingerprint input unit being authenticated in the first mode.

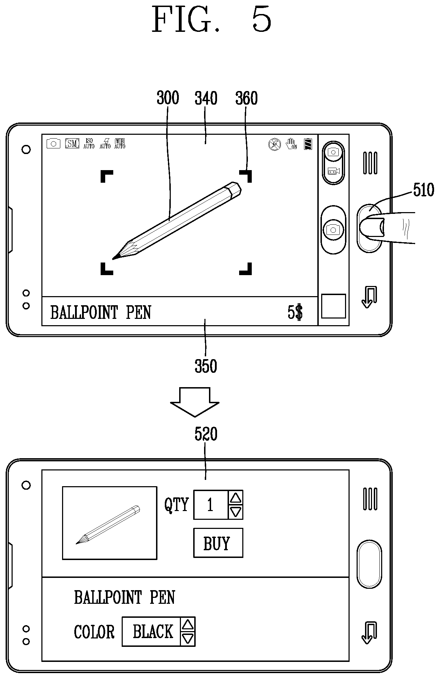

FIG. 5 is a conceptual view for explaining an embodiment in which a product purchase screen is displayed.

Referring to FIG. 5, a touch input may be applied to the fingerprint input unit 510 to enter a fingerprint in the first mode. Accordingly, when a fingerprint being entered is authenticated, the preview image 340 focused on the ballpoint pen 300 may be captured, and screen information 520 capable of purchasing the ballpoint pen 300 may be displayed.

At this time, the preview image 340 of the ballpoint pen 300 may be stored in the preset folder.

For an embodiment, the fingerprint input unit 510 may be implemented as a physical key (home key) on a front surface of the terminal 100 or may be disposed in one region of the display unit 151. Alternatively, it may be separately implemented on a rear surface of the terminal 100.

For still another embodiment, the user may apply a touch input to the photographing icon 410 in the first mode, and then apply a touch input to the fingerprint input unit 510 within a predetermined period of time to enter a fingerprint. Accordingly, when a fingerprint being entered is authenticated, the preview image 340 focused on the ballpoint pen 300 may be captured, and screen information 520 capable of purchasing the ballpoint pen 300 may be displayed.

On the other hand, the controller 180 may enter a fourth mode for displaying a preview image focused on the specific object and information related to the specific object in a first region of the display unit 151, and displaying a plurality of captured images stored in the folder and information corresponding to each of the plurality of captured images in a second region of the display unit 151 based on a preset fourth user input being applied in the camera photographing mode.

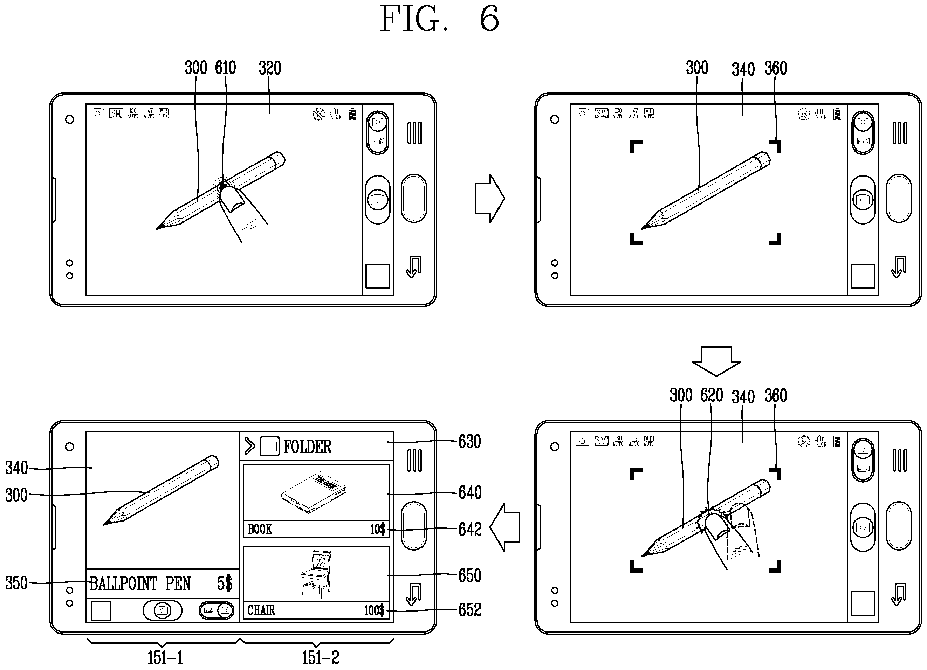

FIG. 6 is a conceptual view for explaining an embodiment in which product related information and a folder in which a product is stored are displayed on a divided screen.

Referring to FIG. 6, when a touch input is applied to a camera icon being displayed on the home screen, a camera photographing mode may be carried out as described in FIG. 3. Accordingly, a preview image 320 may be displayed on the screen 151 by the camera 121 at present.

Specifically, the preview image 320 may denote an image displayed through the camera 121 prior to capturing, and the preview image 320 may include a specific object 300. For example, a preview image 320 of the ballpoint pen 300 may be displayed.

At this time, when a touch input 610 is applied to a region in which the ballpoint pen 300 is displayed on the preview image 320 of the ballpoint pen 300 for a predetermined period of time, the preview image 340 focused on the ballpoint pen 300 may be displayed.

Subsequently, when a short touch input or tap input 620 is applied to the preview image 340 focused on the ballpoint pen 300, the terminal enters the fourth mode.

Specifically, in the fourth mode, the screen 151 may be divided into a first region 151-1 and a second region 151-2. At this time, the preview image 340 focused on the ballpoint pen 300 and information 350 related to the ballpoint pen 300 may be displayed in the first region 151-1.

For an embodiment, the information 350 related to the ballpoint pen 300 may include the name, price, specification, and the like of the ballpoint pen 300. Here, the information 350 may be received from an external server or retrieved through a network communication network. Alternatively, the information 350 may also be stored in the terminal 100.

Furthermore, a plurality of captured images stored in a preset folder and information 630 corresponding thereto may be displayed in the second region 151-2. In other words, screen information 630 in which the folder is open may be displayed.

For an embodiment, previously stored product images and information on each product may be displayed on the screen information 630. Here, the product image denotes an image captured by focusing the product.

Specifically, an image 640 of most recently stored first product and price information 642 on the first product may be displayed at the top. Subsequently, an image 650 of a second product stored before the first product and price information 652 on the second product may be displayed. At this time, when there are a plurality of stored product images, the user may apply a scroll input or the like to confirm the list.

For another embodiment, the preset folder may be a folder included in a photo album (gallery), or may be a storage set in a separate application or memory.

For still another embodiment, the sizes of the first region 151-1 and the second region 151-2 may be the same or may be adjusted according to an amount of information displayed in each region. For example, when there are a plurality of product images stored in the folder, the second region 151-2 may be set to be larger than the first region 151-1.

According to an embodiment of FIG. 6, a fourth user input for entering the fourth mode is described as a short touch input or a tap input 620, but the present invention is not limited thereto. In other words, the fourth user input may be set to various types of touch inputs.

For yet still another embodiment, the user may enter a different mode based on the location of the terminal 100 when a user input for storing a product image and product information is applied.

Specifically, in case that the terminal 100 is located in a place such as a mart where a product can be purchased when a tap input 620 is applied to the preview image 340 focused on the ballpoint pen 300, the terminal 100 may enter the fourth mode. Accordingly, the image and information of a product to be purchased are displayed in the first region 151-1, and the images and information of products captured at the mart are displayed in the second region 151-2.

On the other hand, when the terminal 100 is not located in a place where a product can be purchased, the terminal 100 may enter the second mode described in FIG. 4. In other words, as described in FIG. 4, the product images and information stored in the preset folder may be displayed on the screen 151.

For still yet another embodiment, when user inputs for storing a plurality of products and product information are consecutively applied within a predetermined period of time, the terminal may enter the fourth mode.

For a specific embodiment, when the preview image and price information of a first product are stored, and then a user input for storing the preview image and price information of a second product is applied within 5 minutes, the terminal may enter the fourth mode. Accordingly, the image and information of the second product are displayed in the first region 151-1, and the image and information of the first product are displayed in the second region 151-2.

On the other hand, the controller 180 may capture the preview image, and then store the captured image and information related to the specific object in the folder and display them in a second region of the display unit 151 based on a preset fifth user input being applied in the fourth mode.

Furthermore, the controller 180 may display a total sum of price information on a plurality of objects included in each of the plurality of captured images stored in the folder together with price information on the specific object in a first region of the display unit 151.

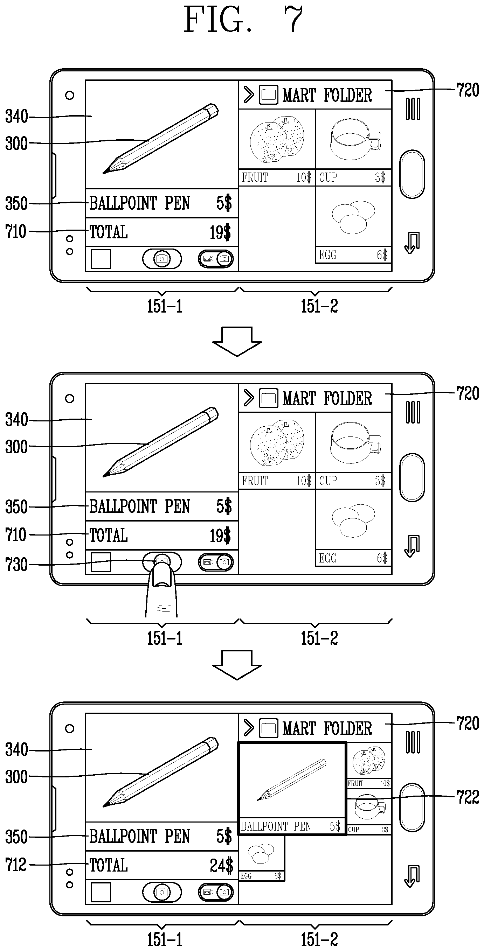

FIG. 7 is a conceptual view for explaining an embodiment illustrating a process of storing a product in a folder.

Referring to FIG. 7, the preview image 340 focused the ballpoint pen 300 and the price information 350 of the ballpoint pen 300 may be displayed in the first region 151-1 as an embodiment of the fourth mode.

A plurality of captured images stored in a folder set to store images captured at a mart and information 720 corresponding thereto may be displayed in the second region 151-2. In other words, screen information 720 in which the folder is open may be displayed.

The screen information 720 may include the images of products captured and stored at a mart and the price information of each product. Furthermore, the product images may be sequentially displayed according to the stored order. Specifically, the most recently stored product image and price information may be displayed at the top.

In addition, a total amount 710 of products stored in the folder together with the price information 350 of the ballpoint pen 300 may be displayed in the first region 151-1.

Subsequently, when a touch input is applied to a photographing icon 730, a preview image 340 focused on the ballpoint pen 300 may be captured and stored in the folder.

Accordingly, an image that has captured the ballpoint pen 300 and the price information 722 of the ballpoint pen 300 may be displayed at the top of the second region 151-2. At this time, a blinking effect or color may be added to an edge of the image 722 so as to be distinguished from other product images, or it may be displayed in a different size.

Moreover, as the image that has captured the ballpoint pen 300 is stored, a total amount 712 of products displayed in the first region 151-1 is increased by the price of the ballpoint pen 300.

On the other hand, the controller 180 may display screen information for purchasing the plurality of objects based on a preset sixth user input being applied in the fourth mode.

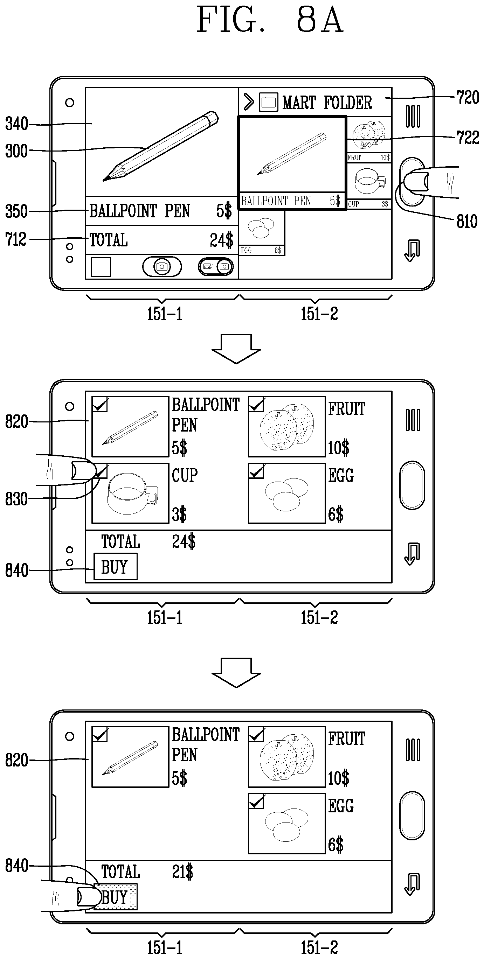

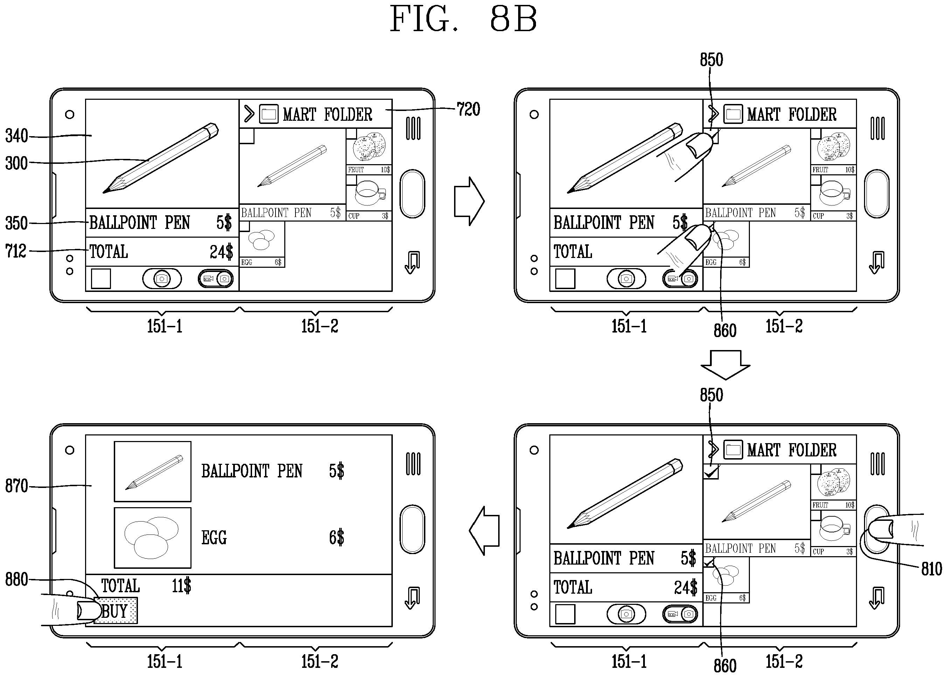

FIGS. 8A and 8B are conceptual views for explaining an embodiment for selecting a product desired to be purchased from a plurality of products.

Referring to FIG. 8A, when a fingerprint entered to the fingerprint input unit 810 is authenticated in the fourth mode illustrated in FIG. 7, screen information 820 for purchasing a product may be displayed. For an embodiment, a screen in which products stored at a mart are placed in a shopping cart for the payment of the products may be displayed.

At this time, all the products stored at a mart may be selected, and a check box corresponding to each product may be displayed with a check mark. When it is desired to exclude a specific product from the stored products, a touch input may be applied to the check box 830 corresponding to the specific product to exclude the specific product from the purchase. In other words, the user may select a product to be purchased, and then apply a touch input to the purchase icon 840 to purchase the selected product.

Referring to FIG. 8B, the preview image 340 focused the ballpoint pen 300 and the price information 350 of the ballpoint pen 300, and a total amount 712 of products captured at a mart may be displayed in the first region 151-1 as an embodiment of the fourth mode.

A plurality of captured images stored in a folder set to store images captured at a mart and information 720 corresponding thereto may be displayed in the second region 151-2. In other words, screen information 720 in which the folder is open may be displayed.

The screen information 720 may include the images of products captured and stored at a mart and the price information of each product. Furthermore, the product images may be sequentially displayed according to the stored order. Specifically, the most recently stored product image and price information may be displayed at the top.

In addition, a check box corresponding to each product image may be displayed, and a touch input may be applied to the check box to select a product to be purchased.

Specifically, when a touch input is applied to a check box 850 corresponding to the image of the ballpoint pen 300, a check mark may be displayed on the check box 850 to select the ballpoint pen 300. Likewise, when a touch input is applied to a check box 860 corresponding to an image that has captured a cup, a check mark may be displayed on the check box 860 to select the cup.

Subsequently, when an authenticated fingerprint is input to the fingerprint input unit 810, screen information 870 for purchasing the selected ballpoint pen 300 and cup may be displayed. For an embodiment, a touch input may be applied to a purchase icon 880 displayed on the screen information 870 to purchase the ballpoint pen 300 and cup.

On the other hand, the controller 180 may capture a user, and then produce information related to the user from the captured image, and display information related to the specific object produced based on the information related to the user on the basis of a preset seventh user input being applied in the first mode.

For an embodiment, the controller 180 may capture the user's face, and produce at least one of the user's age, gender and emotional state from the captured image as information related to the user based on the preset seventh user input being applied in the first mode.

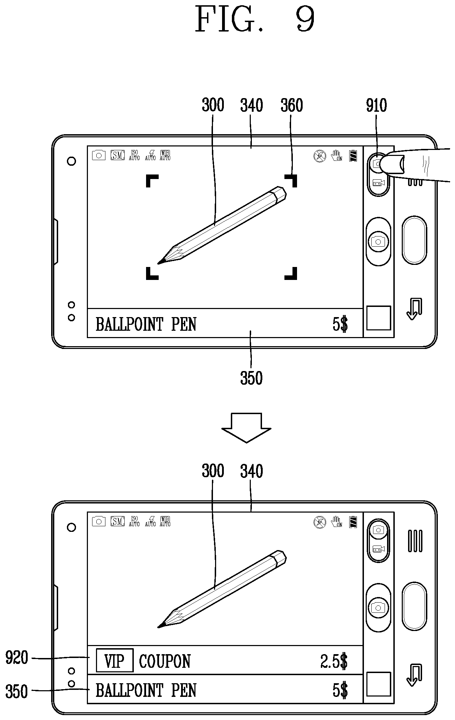

FIG. 9 is a conceptual view for explaining an embodiment in which user-based product related information is displayed.

Referring to FIG. 9, as an embodiment of the first mode, an icon 910 of the front camera 121a may be displayed. When a touch input is applied to the icon 910 of the front camera 121a, a user's face facing the front of the terminal 100 may be captured. In other words, the user's face may be recognized through the front camera 121a while viewing the preview image and the price information of the ballpoint pen 300 through the rear camera 121b.

Subsequently, the controller 180 may derive the age group, gender, and the like of the user from a facial image of the recognized user. Alternatively, an emotional state derived from the movement of facial muscles may be digitized and stored in the database.

For another embodiment, user information may be extracted without capturing or storing the user's face in order to prevent the occurrence of problems related to personal information leakage. Alternatively, a captured user facial image may be stored in a temporary storage.

For still another embodiment, information in which a user is recognized (user IDed) from the user's facial image and that the recognized user has a discount coupon as a member of the mart may be derived. Accordingly, the price information 920 of the ballpoint pen 300 to which the discount coupon is applied may be displayed.

When the foregoing embodiments of the present invention may be broadly divided into a first mode in which the product image and the product information are simultaneously displayed, a second mode in which the product image and the product information are stored, a third mode in which the product is purchased, a fourth mode in which a plurality of product images and product information are simultaneously displayed, and a state in which the user's face is recognized to derive the relevant items of the product information (refer to FIG. 9).

Entry and switching to each mode may be carried out by various input methods as well as the above-described embodiments. Furthermore, the displayed product information may be set in various ways.

Hereinafter, various embodiment will be described with reference to the drawings.

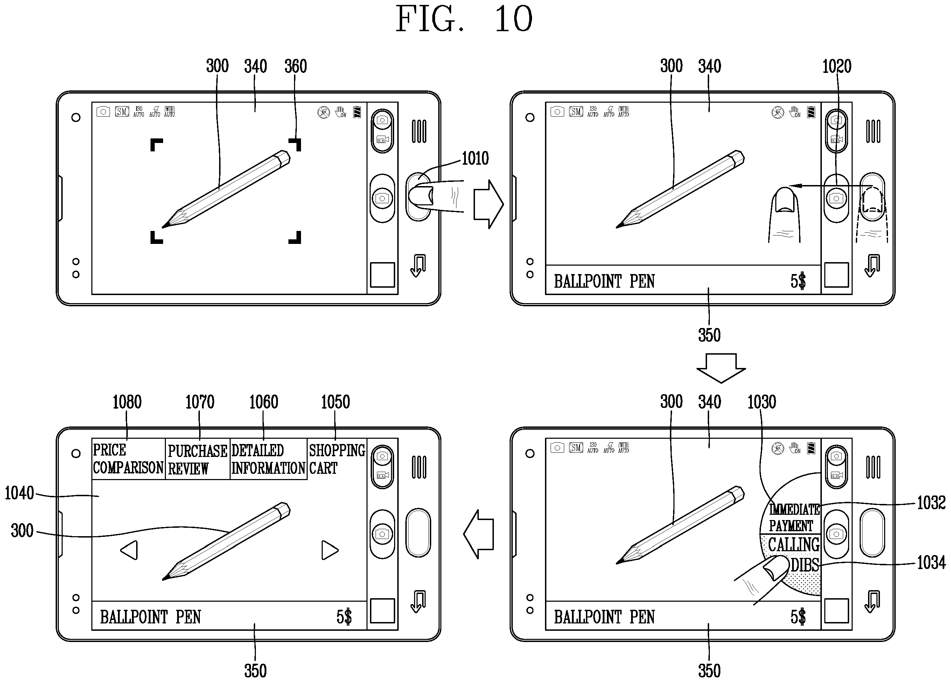

FIG. 10 is a conceptual view for explaining another embodiment in which a product image and product related information are stored.

Referring to FIG. 10, when an authenticated fingerprint is input to the fingerprint input unit 1010 while the preview image 340 focused on the ballpoint pen 300 is displayed, the price information 350 of the ballpoint pen 300 may be displayed. In other words, the terminal may enter the first mode.

Subsequently, when an input 1020 for dragging a finger touched for fingerprint input to an inside of the screen 151 is applied, a menu icon 1030 for entering the second mode or the third mode may be displayed.

For an embodiment, the menu icon 1030 may include a calling-dibs icon 1034 that can enter a second mode (calling-dibs mode) for storing the image and price information of the ballpoint pen 300, and a payment icon 1032 that can enter the third mode (payment mode) capable of immediately purchasing the ballpoint pen 300.

Accordingly, when a touch input is applied to the payment icon 1032, screen information on payment of the ballpoint pen 300 may be displayed. In other words, the terminal may enter the third mode.

On the other hand, when a touch input is applied to the calling-dibs icon 1034, the ballpoint pen 300 may be stored in a folder (a calling-dibs folder, a wish list, or the like) for storing a product desired to be purchased, and screen information 1040 corresponding thereto may be displayed. In other words, the terminal may enter the second mode.

For an embodiment, the screen information 1040 may include a shopping cart menu 1050, a detailed information menu 1060, a purchase review menu 1070, a price comparison menu 1080, and the like, and a touch input may be applied to each of the menus 1050, 1060 , 1070, 1080 to check the specific contents.

Specifically, the ballpoint pen 300 is contained in the shopping cart menu 1050. In addition, when a touch input is applied to the detailed information menu 1060, specification information such as color, thickness, and size of the ballpoint pen 300 may be displayed. Furthermore, when a touch input is applied to the purchase review menu 1070, the purchase ratings of the ballpoint pen 300 may be displayed, and when a touch input is applied to the price comparison menu 1080, a site where the ballpoint pen 300 can be purchased and the price Information may be displayed.

For another embodiment, the terminal may enter the second mode or the third mode from the first mode depending on a direction in which a drag input is applied.

Specifically, when a drag input is applied in an upward slanting direction as compared with the drag input 1020, the terminal may enter the third mode in which screen information capable of purchasing the ballpoint pen 300 is displayed.

On the contrary, when a drag input is applied in a downward slanting direction, the ballpoint pen 300 may be stored in a folder (a calling-dibs folder, a wish list, or the like) for storing a product desired to be purchased, and screen information 1040 corresponding thereto may be displayed. In other words, the terminal may enter the second mode.

According to this embodiment, the terminal may immediately enter a desired mode without displaying the menu icon 1030.

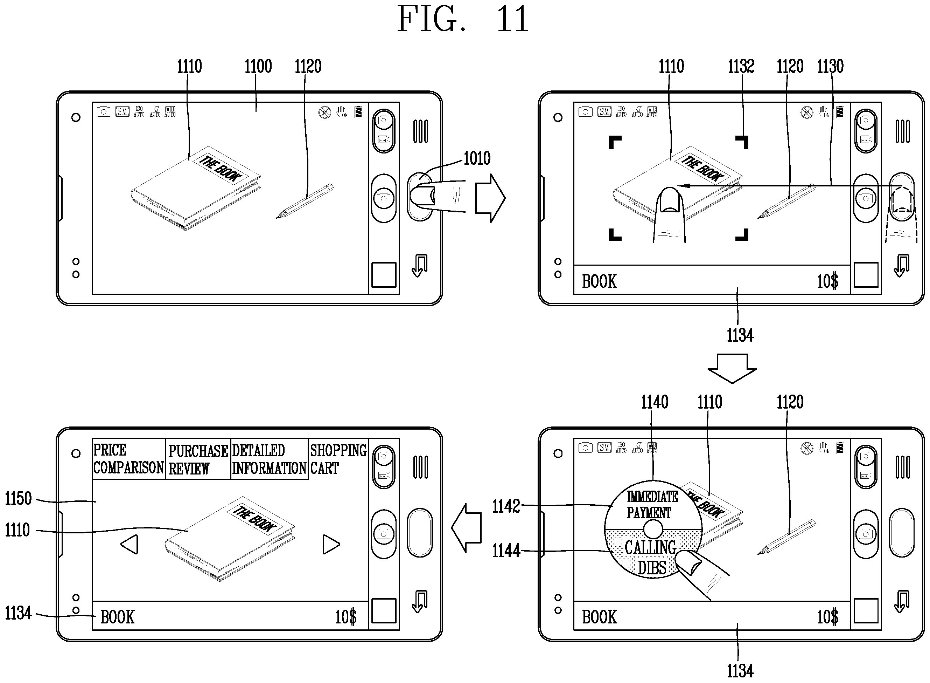

FIG. 11 is a conceptual view for explaining an embodiment in which an image of a product selected from a plurality of products and product related information are stored.

Referring to FIG. 11, an authenticated fingerprint may be input to the fingerprint input unit 1010 while the preview image 1100 of the first product 1110 and the second product 1120 is displayed. Subsequently, an input for dragging a finger touched for fingerprint input to one of a plurality of products may be applied to select one product.

For an embodiment, an input 1130 for dragging a finger touched for fingerprint input may be applied toward the first product 1110 to select the first product 1110. Accordingly, a focusing frame 1132 may be displayed on the first product 1110 and the price information 1134 of the first product 1110 may be displayed. In other words, the terminal may enter the first mode.

Then, when a user releases a finger brought to the first product 1110, a menu icon 1140 for entering the second mode or the third mode may be displayed adjacent to the first product 1110.

For an embodiment, the menu icon 1140 may include a calling-dibs icon 1144 that can enter a second mode (calling-dibs mode) for storing the image and price information of the first product 1110, and a payment icon 1142 that can enter the third mode (payment mode) capable of immediately purchasing the first product 1110.

Accordingly, when a touch input is applied to the payment icon 1142, screen information on payment of the first product 1110 may be displayed. In other words, the terminal may enter the third mode.

On the other hand, when a touch input is applied to the calling-dibs icon 1144, the first product 1110 may be stored in a folder (a calling-dibs folder, a wish list, or the like) for storing a product desired to be purchased, and screen information 1040 corresponding thereto may be displayed. In other words, the terminal may enter the second mode.

As illustrated in FIG. 10, the screen information 1150 may include a shopping cart menu, a detailed information menu, a purchase review menu, a price comparison menu, and the like, and a touch input may be applied to each menu (menu tab) to check the specific contents.

Specifically, the first product 1110 is contained in the shopping cart menu. Furthermore, when a touch input is applied to the detailed information menu, information on the first product 1110 may be displayed. In addition, when a touch input is applied to the purchase review menu, the purchase ratings of the first product 1110 may be displayed, and when a touch input is applied to the price comparison menu, a site where the first product 1110 can be purchased and the price Information may be displayed.

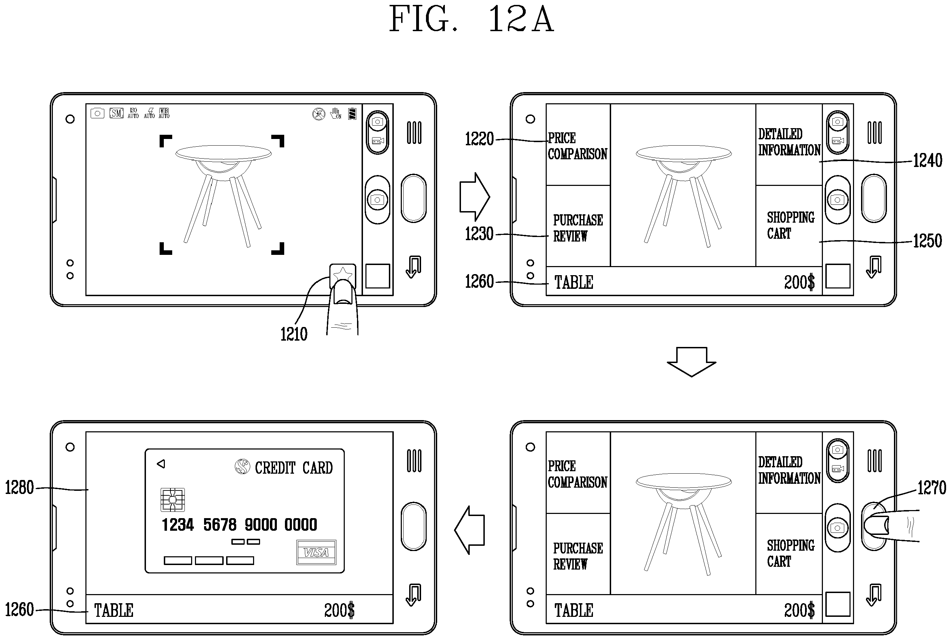

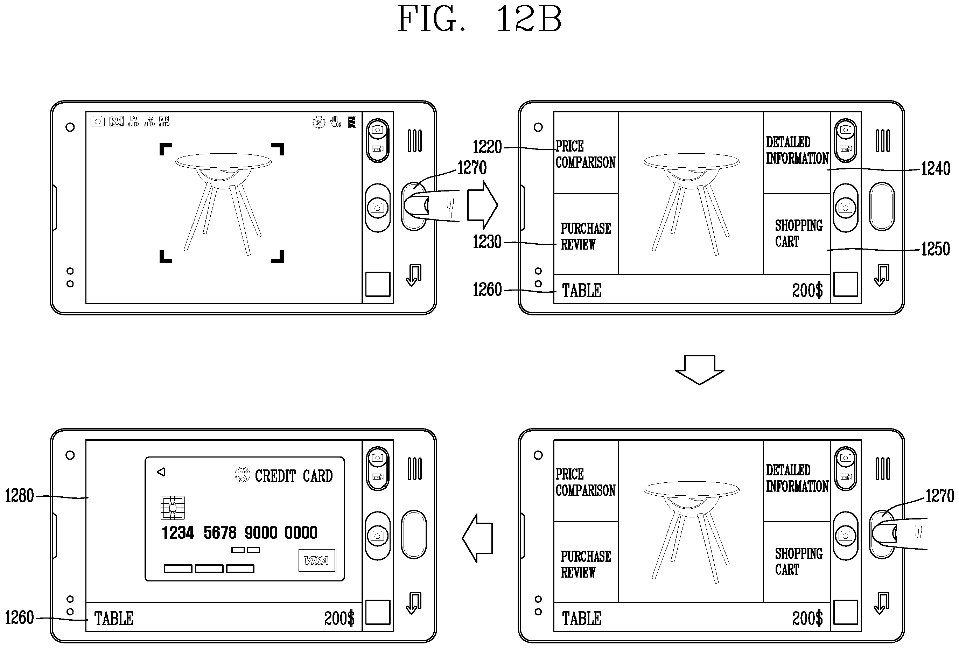

FIGS. 12A and 12B are conceptual views for explaining an embodiment in which product related information enters a payment mode after being displayed.

Referring to FIG. 12A, when a table is focused in a camera photographing mode (focusing), and then a touch input is applied to a calling-dibs icon 1210, the terminal enters a camera-calling-dibs mode. In other words, the terminal may enter the first mode.

For an embodiment, a price comparison menu 1220, a purchase review menu 1230, a product detailed information menu 1240, a shopping cart menu 1250, and the like may be displayed in the camera-calling-dibs mode. Furthermore, the model name and price information 1260 and the like of the table may be displayed.

Subsequently, when an authenticated fingerprint is input to the fingerprint input unit 1270, a payment screen 1280 for purchasing the table may be displayed. For example, a payment card image or the like may be displayed.

Referring to FIG. 12B, a table may be focused in a camera photographing mode (focusing), and then an input for bringing a finger to touch the fingerprint input unit 1270 may be applied to enter an authenticated fingerprint. As a result, the terminal enters the camera-calling-dibs mode.

For an embodiment, a price comparison menu 1220, a purchase review menu 1230, a product detailed information menu 1240, a shopping cart menu 1250, and the like may be displayed in the camera-calling-dibs mode. Furthermore, the model name and price information 1260 and the like of the table may be displayed.

Subsequently, when an input for bringing a finger to press the fingerprint input unit 1270 is applied, a payment screen 1280 for purchasing a table may be displayed. For example, a payment card image or the like may be displayed.

For another embodiment, when a touch input is applied to a region (for example, a background portion such as a wall or a floor) other than a region where the table is displayed in the camera-calling-dibs mode described in FIGS. 12A and 12B, the terminal may return to the camera photographing mode.

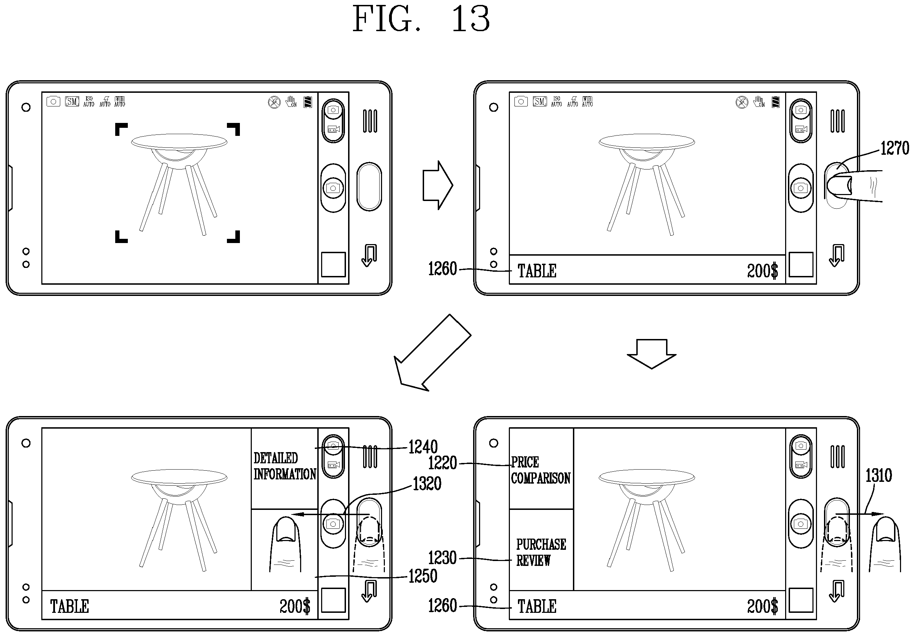

FIG. 13 is a conceptual view for explaining another embodiment in which product related information is displayed.

Referring to FIG. 13, a table may be focused in a camera photographing mode (focusing), and then an input for bringing a finger to touch the fingerprint input unit 1270 may be applied to enter an authenticated fingerprint. Accordingly, the price information 1260 of the table may be displayed.

Subsequently, when a drag input 1310 to an outside of the terminal 100 is applied without releasing a finger through which a touch input has been applied to the fingerprint input unit 1270, the price comparison menu 1220 and the purchase review menu 1230 may be displayed in the left region of the screen 151.

For another embodiment, when a drag input 1310 to an inside of the terminal 100 is applied without releasing a finger through which a touch input has been applied to the fingerprint input unit 1270, the product detailed information menu 1240 and the shopping cart menu 1250 may be displayed on the right region of the screen 151.

According to the foregoing embodiment, an authenticated fingerprint may be input to the fingerprint input unit 1270, and then moved left and right without releasing the finger to display the price comparison menu 1220, the purchase review menu 1230, the product detailed information menu 1240, the shopping cart menu 1250, and the like.

At this time, when the finger applying a touch input to the fingerprint input unit 1270 is released, the terminal returns to the camera photographing mode in which the preview image of the table is displayed. Alternatively, when a finger applying a touch input to the fingerprint input unit 1270 is released, and there is no interaction (user input, etc.) for a few seconds or a return button is pressed, the terminal returns to the camera photographing mode.

For another embodiment, when the fingerprint input unit 1270 is pressed with a finger applying a touch input to the fingerprint input unit 1270, a payment screen 1280 for purchasing the table may be displayed. For example, a payment card image or the like may be displayed.

For an embodiment related to payment, when a drag input or the like is applied to a payment card image, destination information derived based on a record recently received from a store or an online mall is automatically entered and used for payment.

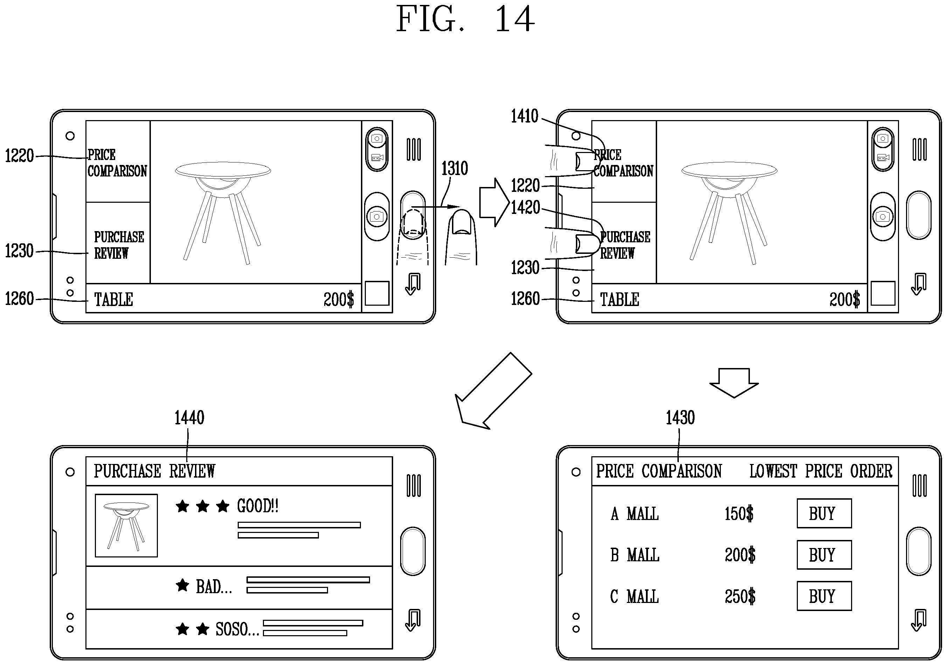

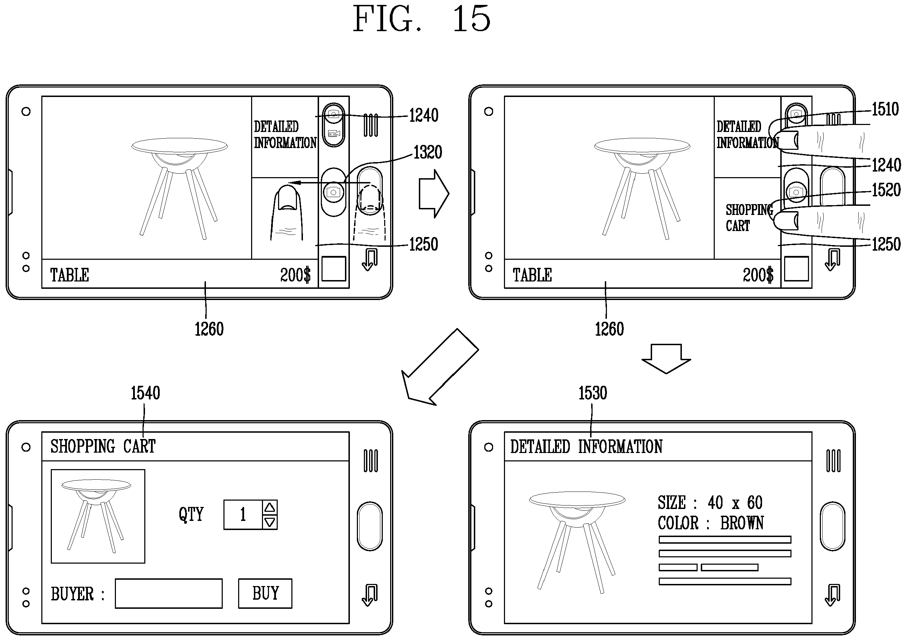

FIGS. 14 and 15 are conceptual diagrams for explaining an embodiment for confirming product related information prior to storing a product.

Referring to FIG. 14, as illustrated in FIG. 13, when a drag input 1310 to an outside of the terminal 100 is applied without releasing a finger through which a touch input has been applied to the fingerprint input unit 1270, the price comparison menu 1220 and the purchase review menu 1230 may be displayed in the left region of the screen 151.

Subsequently, when a touch input 1410 is applied to the price comparison menu 1220, screen information 1430 in which prices are compared at online shops where tables can be purchased may be displayed. For example, they may be displayed in the order of lowest online prices. If a touch input 1420 is applied to the purchase review menu 1230, then product rating information 1440 written by the buyers of the table may be displayed.

Referring to FIG. 15, as illustrated in FIG. 13, when a drag input 1320 to an inside of the screen 151 is applied without releasing a finger through which a touch input has been applied to the fingerprint input unit 1270, the product detailed information menu 1240 and the shopping cart menu 1250 may be displayed in the right region of the screen 151.

Subsequently, when the touch input 1510 is applied to the product detailed information menu 1240, specific detailed information 1530 such as the size, color and the like of the table may be displayed. If a touch input 1520 is applied to the shopping cart menu 1250, a shopping cart screen 1540 containing a table for purchase may be displayed.

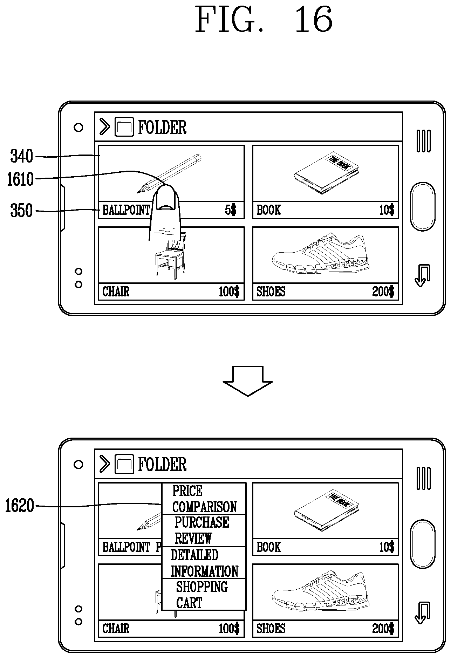

FIG. 16 is a conceptual view for explaining an embodiment for confirming product related information subsequent to storing a product.

Referring to FIG. 16, as illustrated in FIG. 4, a plurality of product images stored in a preset folder and information corresponding thereto may be displayed.

When a touch input is applied to the captured image 340 of the ballpoint pen 300, a popup window 1620 including menus such as price comparison, purchase review, detailed information, shopping cart, and the like may be displayed on the captured image 340.

On the other hand, the controller 180 may display price information on the specific object produced in consideration of the current location of the terminal as information related to the specific object, and display a result of comparing price information disclosed in a site where the specific object can be purchased and price information on the specific object based on a preset user input being applied.

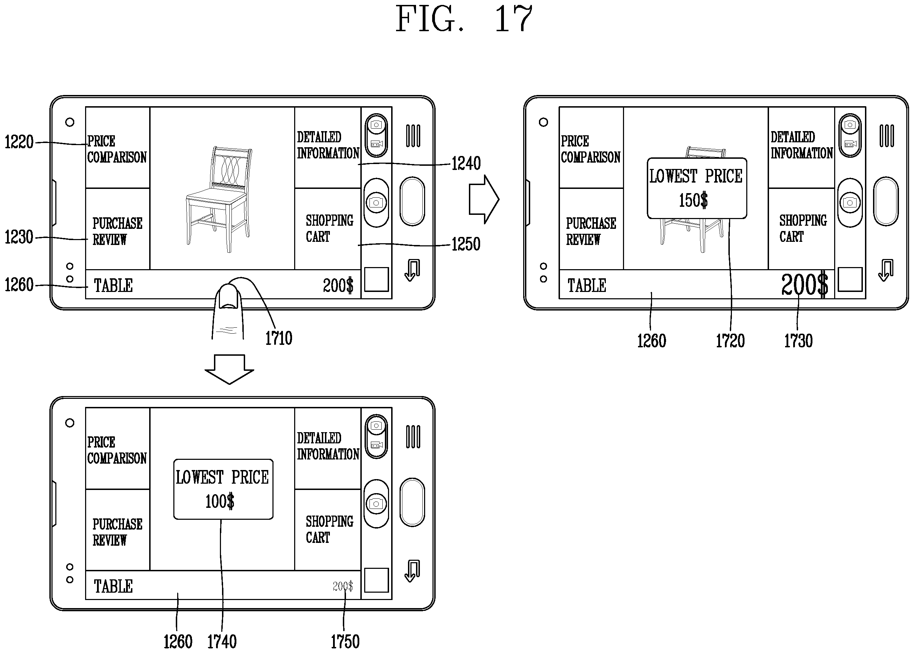

FIG. 17 is a conceptual view for explaining an embodiment for displaying price information of a product disclosed on a site and a result of comparing the price information of the product.

Referring to FIG. 17, when a touch input 1710 is applied to the price information 1260 in the camera-calling-dibs mode, the lowest price information 1720, 1740 of a table retrieved from the Internet site may be displayed. For an embodiment, the price information 1260 may be a price that can be purchased at a mart when the terminal 100 is located at the mart.

If the searched minimum price falls within a preset price range (1720), the price information 1260 may be classified into a reasonable price and displayed in a large font or changed to green (1730).

On the contrary, the searched minimum price falls out of a preset price range (1740), the price information 1260 may be classified into an unreasonable price and displayed in a small font or changed to red (1750).

For another embodiment, when it is inexpensive compared to an average price that is searched on the Internet site, the price information 1260 may be displayed in a large green font. On the other hand, the price information may be displayed in a small red font when it is more expensive than the average price, and displayed in a medium-sized gray font when it is the same or similar to the average price.

On the other hand, as illustrated in FIG. 9, the front camera 121a may be used to derive information related to a user to further display product information related thereto. Hereinafter, an additional embodiment related thereto will be described.

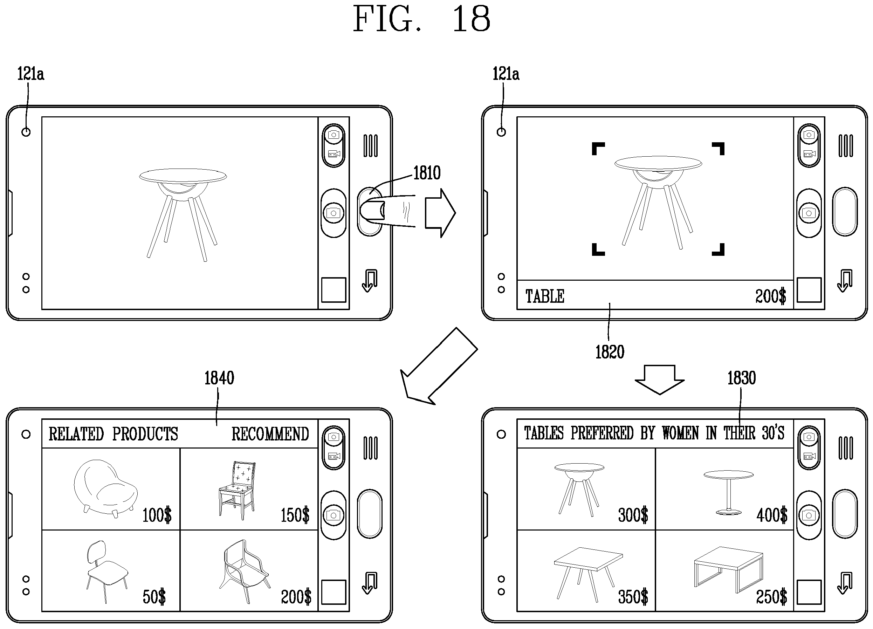

FIG. 18 is a conceptual view for explaining an embodiment in which a product is recommended according to a result of analyzing a user.

Referring to FIG. 18, when an authenticated fingerprint is input to the fingerprint input unit 1810 while a preview image of a table is displayed, the price information 1820 of the table may be displayed.

Furthermore, the user's face may be recognized by the front camera 121a. Then, based on the recognized face of the user, the terminal may derive the user's age, gender, whether or not the user prefers the table, and the like.

If it is determined that the user does not prefer the table, table information 1830 preferred by those with the same age and gender may be displayed.

On the contrary, when it is determined that the user prefers the table, other products 1840 associated with the table may be recommended. For example, a small article or a chair suitable for the table may be displayed as the related products 1840.

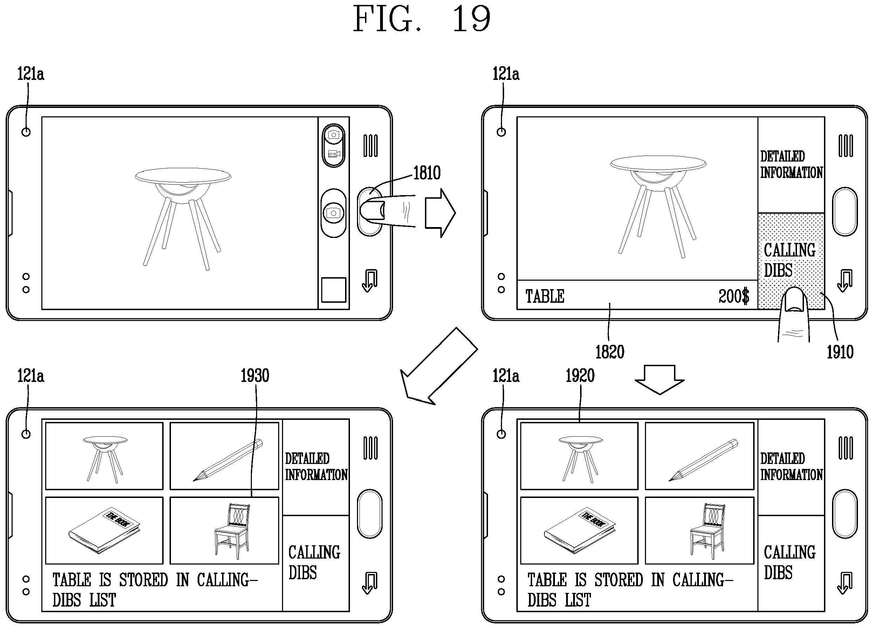

FIG. 19 is a conceptual view for explaining an embodiment in which a product is stored according to a result of analyzing a user.

Referring to FIG. 19, when an authenticated fingerprint is input to the fingerprint input unit 1810 while the preview image of the table is displayed, the price information 1820 of the table and a calling-dibs menu 1910 for entering the second mode are displayed.

Accordingly, when a touch input is applied to the calling-dibs menu 1910, the front camera 121a may be activated to recognize the user's face. Furthermore, based on the recognized face of the user, the terminal may derive the user's age, gender, whether or not the user prefers the table, and the like.

If it is determined that the user prefers the table, then an image that has captured the table may be displayed (1920) at the top within a folder in which the calling-dibs product is stored. On the contrary, when it is determined that the user does not prefer the table, it may be displayed (1930) at the bottom of the folder.

In other words, when the user has a satisfied facial expression with the product, the rank stored in the folder is increased, and when having an unsatisfied facial expression with the product, a lower rank may be stored therein. According to the stored rank as described above, the order of being displayed in the folder also changes. For example, a product with a highest rank is displayed at the top of the list, and a product with a lower rank is displayed at the bottom of the list.

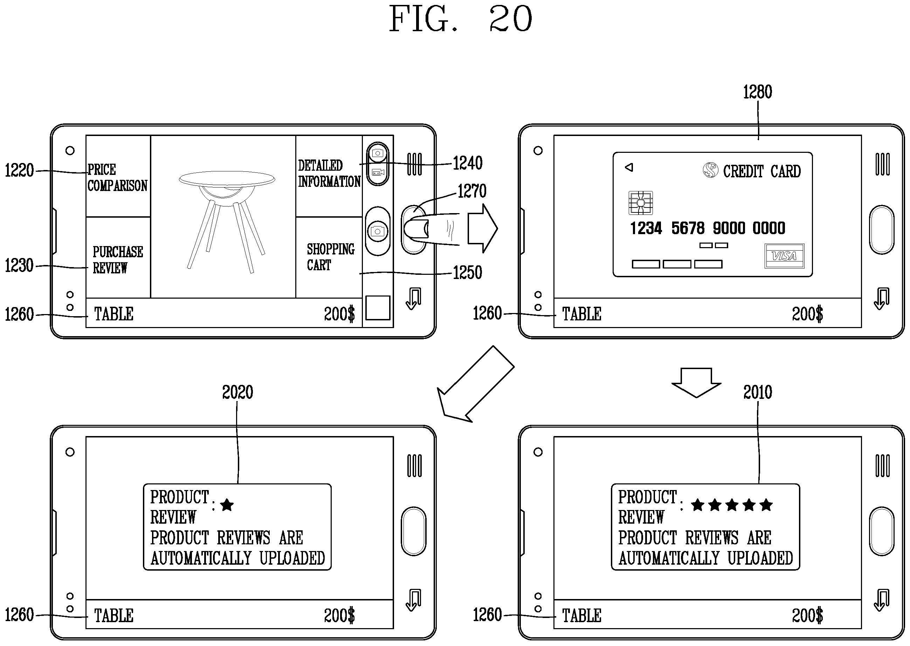

FIG. 20 is a conceptual view for explaining an embodiment in which a product review is registered according to a result of analyzing a user.

Referring to FIG. 20, when a finger is brought to the fingerprint input unit 1270 to apply a pressing input, as illustrated in FIG. 12B, a payment screen 1280 for purchasing a table may be displayed. For example, a payment card image or the like may be displayed.

In this manner, when the user applied a pressing input to the fingerprint input unit 1270 to enter the payment mode, the front camera 121a may be activated to recognize the user's facial expression.

If the user has a satisfied facial expression with the table, a high rated product review 2010 may be registered as a purchase review of the site where the table can be purchased. On the contrary, if the user has an unsatisfied facial expression with the table, a low rated product review 2020 may be registered as a purchase review of the site where the table can be purchased.

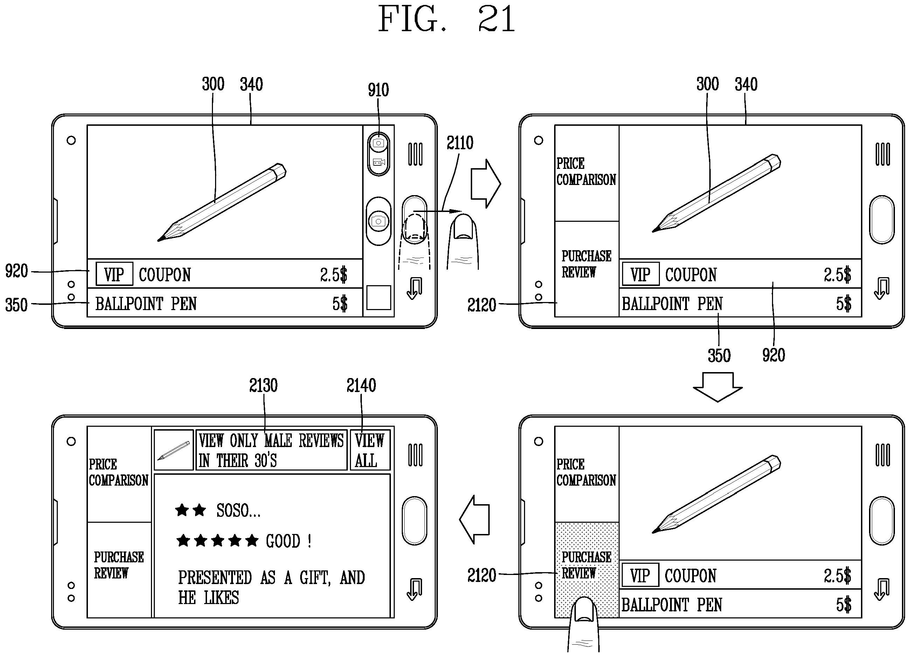

FIG. 21 is a conceptual view for explaining an embodiment in which a product review is shown according to a result of analyzing a user.

Referring to FIG. 21, when a touch input is applied to an icon 910 of the front camera 121a, the face of the user facing the front of the terminal 100 may be captured. In other words, the user's face may be recognized through the front camera 121a while viewing the preview image and the price information of the ballpoint pen 300 through the rear camera 121b.

Subsequently, the controller 180 may derive the age group, gender, and the like of the user from a facial image of the recognized user. Alternatively, an emotional state derived from the movement of facial muscles may be digitized and stored in the database.

For an embodiment, information in which a user is recognized (user IDed) from the user's facial image and that the recognized user has a discount coupon as a member of the mart may be derived. Accordingly, the price information 920 of the ballpoint pen 300 to which the discount coupon is applied may be displayed.

Subsequently, when an authenticated fingerprint is input to the fingerprint input unit and then a drag input 2110 to an outside of the terminal 100 is applied, a price comparison menu icon and a purchase review menu icon 2120 may be displayed.

When a touch input is applied to the purchase review menu icon 2120, only a product review 2130 written by buyers with the same age and gender as the above derived user may be displayed. Alternatively, a touch input may be applied to a entire purchase ratings view icon 2140 to view the entire ratings for the ballpoint pen 300.

Meanwhile, the controller 180 may display visual information corresponding to a preset event based on the occurrence of the preset event in association with the specific object in the second mode.

Hereinafter, a specific embodiment related thereto will be described.

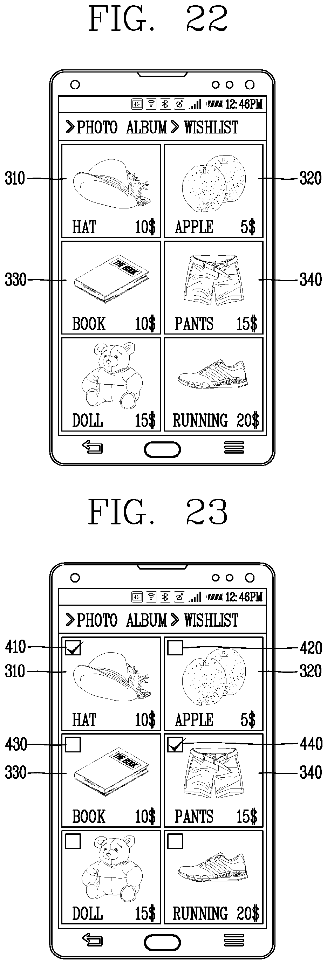

FIG. 22 is a conceptual view for explaining an embodiment of a wish list folder.

Referring to FIG. 22, a touch input may be applied to a gallery icon to display product images and product information 2210, 2220, 2230, 2240 stored in a wishlist folder preset by a predetermined user input.

For an embodiment, the product image and product information of a first product 2210, the product image and product information of a second product 2220, the product image and product information of a third product 2230, and the product image and product information of a fourth product 2240 may be displayed.

At this time, the product image and product information of the recently stored product may be displayed at the top. Specifically, the products may be stored in the order of the fourth product, the third product, the second product, and the first product.

In addition, when products are captured in a specific mode in the camera photographing mode, product images and product information 2210, 2220, 2230, and 2240 may be stored in a wishlist folder.

For an embodiment, a touch input may be applied to a photographing button stored in the wish list folder at the time of capturing, and the product image and product information of the first product 2210 may be stored in the wish list folder.

For another embodiment, when a touch input for focusing a first product on a preview image of the first product is applied, the first product is focused and the product information of the first product may be displayed together. Then, a touch input is applied to the photographing button to store the product image and product information of the first product 2210 in the wish list folder.

For still another embodiment, the product image and product information of the first product 2210 received or uploaded may be stored in the wish list folder. In other words, the stored folder may be designated as a wish list folder.

On the other hand, the controller 180 may display visual information corresponding to a product purchase event on the display unit 151 based on the occurrence of an event for purchasing the product.

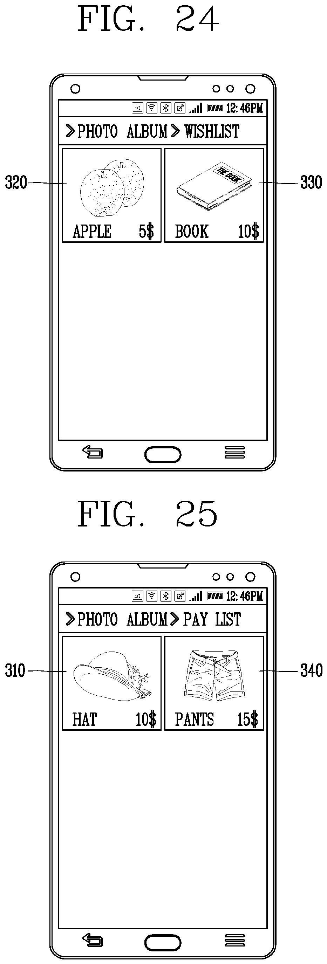

FIGS. 23 and 24 are conceptual views for explaining an embodiment of a wish list folder according to the occurrence of a product purchase event.

Referring to FIG. 23, a purchase check box 2310, 2320, 2330, 2340 corresponding to each of products in a wish list folder may be displayed.

For an embodiment, a purchase check box 2310 of a first product, a purchase check box 2320 of a second product, a purchase check box 2330 of a third product, and a purchase check box 2340 of a fourth product may be displayed on the product images 2210, 2220, 2230, 2240, respectively.

At this time, when an event of purchasing the first product and the fourth product occurs, check marks may be displayed on the purchase check box 2310 of the first product and the purchase check box 2340 of the fourth product.

The product purchase event may be carried out through the terminal 100, but is not limited thereto.

For an embodiment, when the first product is purchased by mobile payment or mobile banking through the terminal 100, a check mark may be displayed on the purchase check box 2310 of the first product.

For another embodiment, when the fourth product is purchased with a credit card or a check card, card payment details may be transmitted to the terminal 100. Accordingly, the purchase of the fourth product is detected, and a check mark may be displayed on the purchase check box 2340 of the fourth product.

For still another example, when a cash receipt is issued by cash purchase of the first product, the details of the cash receipt may be transmitted to the terminal 100. Accordingly, the purchase of the first product is detected, and a check mark may be displayed on the purchase check box 2310 of the first product.

On the other hand, the controller 180 may delete the product image and product information in the preset folder based on the occurrence of an event of purchasing the product.

In addition, the controller 180 may move the product image and product information to a folder where the image and information of the purchase product are stored.

Referring to FIG. 24, when the first product and the fourth product are purchased as illustrated in FIG. 23, the product image and product information 2210 of the first product and the product image and product information 2240 of the fourth product may be deleted in a wish list folder illustrated in FIG. 22.

As for a subsequent embodiment, FIG. 25 is a conceptual view for explaining an embodiment of a purchase list folder according to the occurrence of a product purchase event.

Referring to FIG. 25, the product image and product information 2210 of the first product, the product image and product information 2240 of the fourth product may be moved and stored in a purchase (pay) list (paylist) folder.

For an embodiment associated with FIGS. 24 and 25, when a preset user input is applied, screen switching between the wish list folder and the purchase list folder may be carried out.

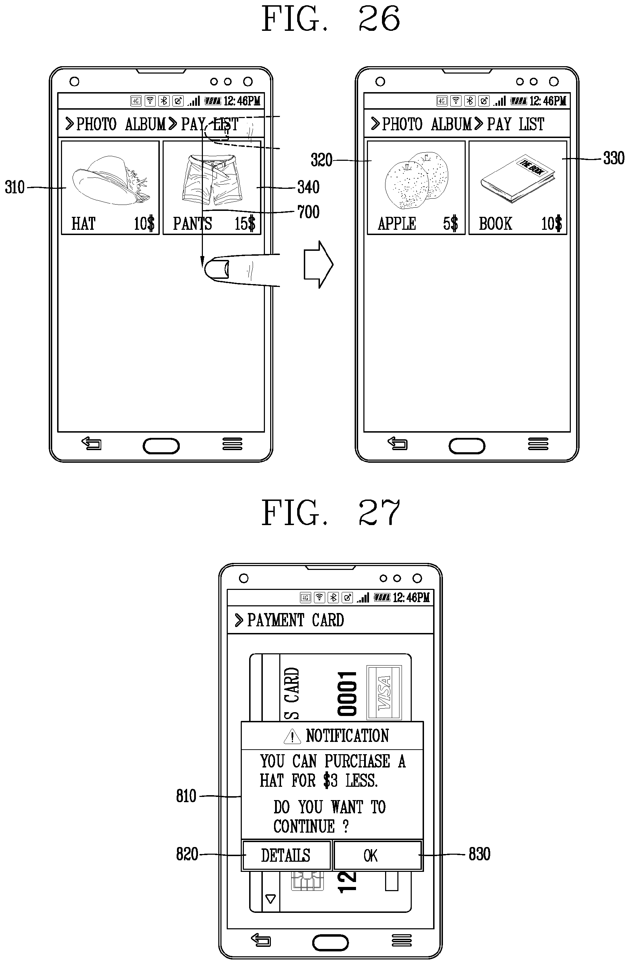

FIG. 26 is a conceptual view for explaining an embodiment of screen switching between a wish list folder and a purchase list folder.

Referring to FIG. 26, when a downward drag input 2600 is applied to the top of the purchase list folder, screen switching to the wish list folder may be carried out.

For a similar embodiment, when a downward drag input is applied to the top of the wish list folder, screen switching to the purchase list folder may be carried out.

Accordingly, the user may easily and quickly confirm a product to be purchased (a product in the wish list folder) and the purchase product (a product in the purchase list).

On the other hand, the controller 180 may display a result of comparing a price of the product stored in the preset folder with an amount to be paid during the purchase of the product, based on the occurrence of an event of purchasing the product, on the display unit 151.

FIG. 27 is a conceptual view for explaining an embodiment in which a price comparison notification message is displayed according to the occurrence of a product purchase event.

Referring to FIG. 27, a result (2710) of comparing a payment amount of a product and a price of the same product stored in the wish list folder prior to payment may be displayed.

For an embodiment, when the price of the same product stored in the wish list folder is cheaper, a message pop-up window 2710 for notifying the information may be displayed on the payment screen.

At this time, when a touch input is applied to an icon 2720 exhibiting more detailed information, offline, online store information in which the product can be purchased at a lower price, the lowest price of the product, and the like, may be displayed. On the contrary, when a touch input is applied to the confirmation icon 2730, the product payment may be resumed.

On the other hand, the controller 180 may display visual information corresponding to a stored event on an icon corresponding to the preset folder based on the occurrence of an event in which a product image and product information are stored in the preset folder by the preset user input.

Specifically, the controller 180 may display a number of occurrences of the stored event on the icon corresponding to the preset folder.

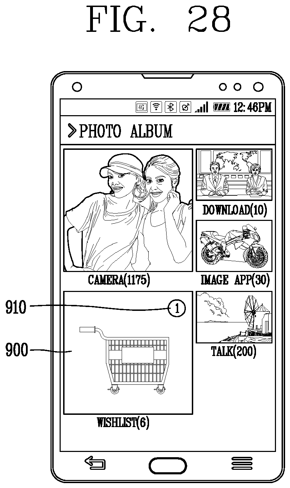

FIG. 28 is a conceptual view for explaining an embodiment in which an icon corresponding to a wish list folder is displayed according to the occurrence of a product store event.

Referring to FIG. 28, a number of occurrences 2810 of a preset event may be displayed on an icon 2800 corresponding to the wish list folder.

For an embodiment, when an event for storing a product image and product information has occurred once, a number of occurrences 2810 indicating the information may be displayed on the icon 2800 corresponding to the wish list folder.

For another embodiment, the number of occurrences 2810 of the event may be displayed at a corner portion of the icon 2800 corresponding to the wish list folder, or may be displayed at an inside of the shopping cart image drawn on the icon 2800 corresponding to the wish list folder.

For still another example, an image corresponding to the most recent occurred event may be displayed instead of the shopping cart image basically drawn on the icon 2800 corresponding to the wish list folder.

Specifically, the most recently stored product image may be displayed as a representative image on the icon 2800 corresponding to the wish list folder.

In addition, when the user opens the wish list folder to confirm the stored product image and product information, the number of occurrences 2810 disappears from the icon 2800. In other words, the number of occurrences 2810 of the event is displayed until the user confirms the occurred event.

For yet still another embodiment, a user may directly set an event desired to receive a notification.

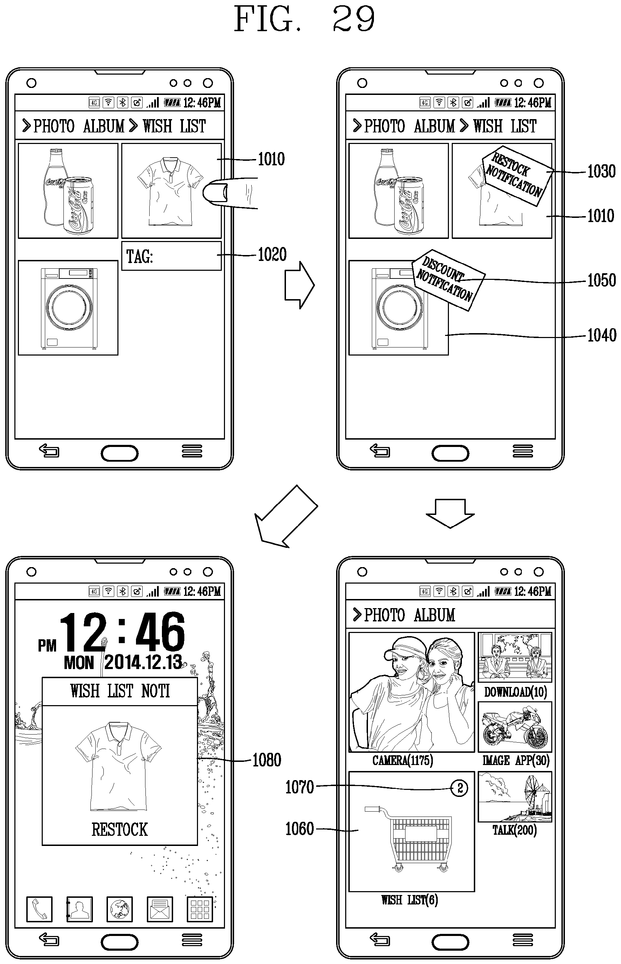

FIG. 29 is a conceptual view for explaining an embodiment for setting an event desired to receive a notification.

Referring to FIG. 29, when a long touch input is applied to one of product images 2910 in the wish list folder, an input window 2920 for entering the content of an event desired to receive a notification may be displayed. Accordingly, a user may enter an event content into the input window 2920 to set an event desired to receive a notification.

For an embodiment, when restock for an out-of-stock product is entered on the input window 2920, a restock notification tag 2930 may be displayed on the product image 2910.

For another embodiment, when a product discount is entered as an event desired to receive a notification, a product discount notification tag 2950 may be displayed on the product image 2940.

For still another embodiment, when a product release is entered as an event desired to receive a notification, a lay-by purchase notification tag 2950 may be displayed on the product image 2940.

Then, when a restock event and a discount event occur, the number of occurrences 2970 of the events may be displayed on the icon 2960 corresponding to the wish list folder.

For yet still another example, an image corresponding to the most recent occurred event may be displayed instead of the shopping cart image basically drawn on the icon 2960 corresponding to the wish list folder.

Specifically, when a restock event has occurred most recently, an image of the restocked products may be displayed as a representative image.

For still yet another embodiment, a message window 2980 for notifying the time of the occurrence of the event may be popped up. Specifically, when a restock event occurs, a pop-up window 2980 indicating the occurrence of the restock event may be displayed on the screen 151 currently being displayed.

On the other hand, the controller 180 may update the information to reflect the changed product information based on the occurrence of an event of changing the product information.

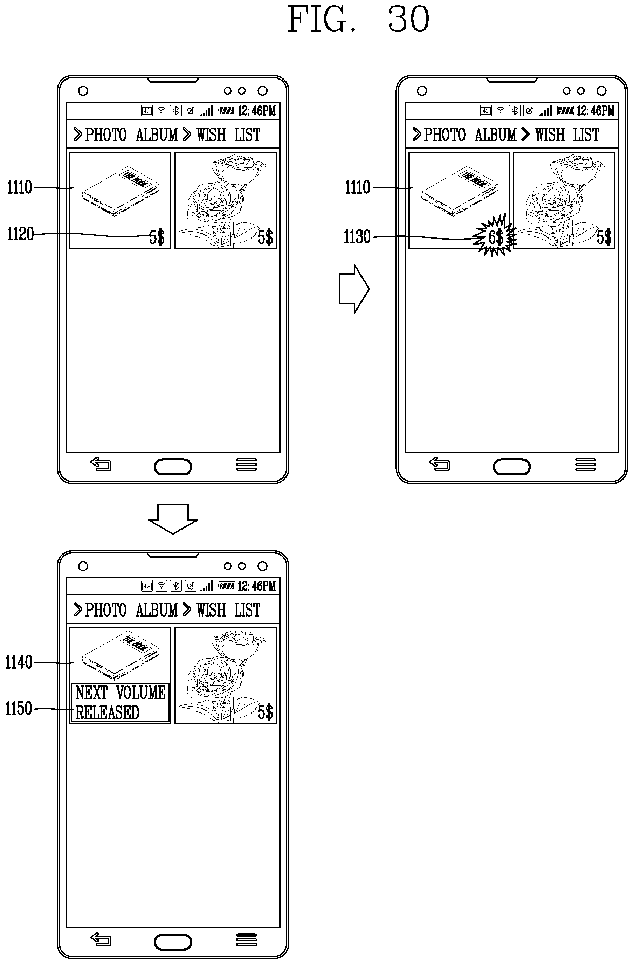

FIG. 30 is a conceptual view for explaining an embodiment in which product information is updated according to the occurrence of an event in which product information is changed.

Referring to FIG. 30, an image 3010 and price information 3020 of the first product may be stored in the wish list folder.

Here, when an event occurs in which the price of the first product is changed, the price information of the first product is stored as changed price information 3030. The changed price information 3030 may display an effect indicating this. For example, the information may be displayed in a large size or different color or displayed with a blinking image effect, or the like.

For another example, when a second product is released, which is the next version of the first product, the image 3010 of the first product may be changed to an image 3040 of the second product. In addition, a message 3050 indicating that a new version has been released may be displayed.

At this time, a new version may be a sequel in case of a movie, a book, a music, and a next model in case of a product such as a household appliance.

For still another embodiment, when a product information change event occurs, a sign for notifying it may be displayed on a folder corresponding to the wish list, or a message popup window may be displayed as in the embodiments of FIGS. 28 and 29.

For an embodiment related to FIG. 30, the occurrence of a product information change event may be received from an external server for confirmation. Specifically, when a sequel of a book stored in the wish list folder is published, the occurrence of the event may be received from a management server of the publisher or the book store.

On the other hand, the controller 180 may display at least one product image and product information related to a preset place on the display unit 151 based on the occurrence of an event in which the location of the terminal 100 is detected as the place.

For an embodiment, the controller 180 may display at least one product image and product information available for purchase at the place on the display unit 151.

For another embodiment, the controller 180 may display at least one product image available for purchase at the location on an icon corresponding to the preset folder.

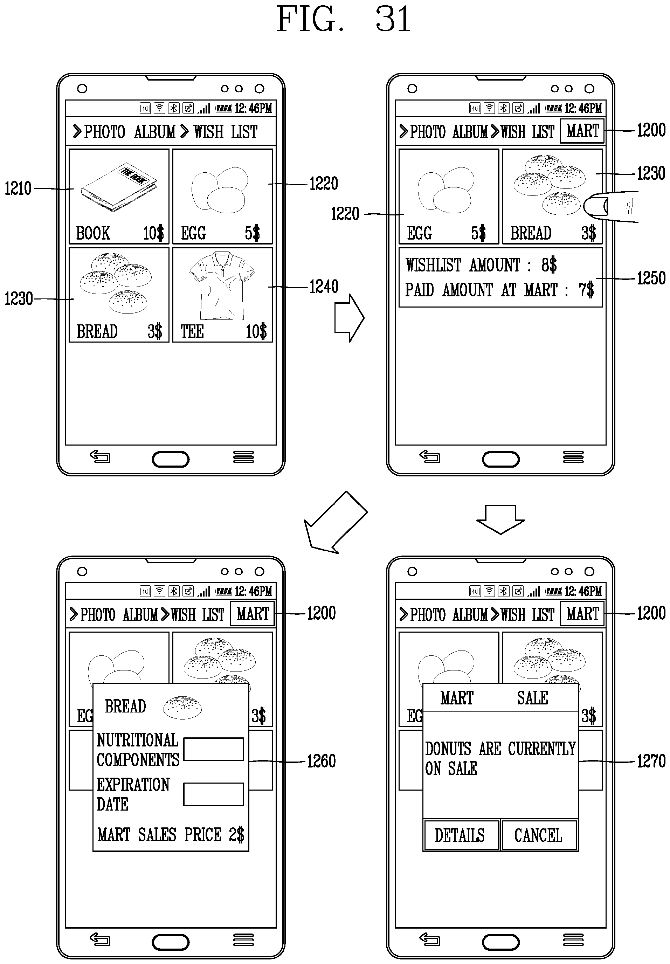

FIG. 31 is a conceptual view for explaining an embodiment in which an image of a product available for purchase at a mart is displayed when a terminal is located near the mart.

Referring to FIG. 31, an image 3110 of a first product, an image 3120 of a second product, an image 3130 of a third product, and an image 3140 of a fourth product may be stored in the wish list folder.

Here, when the terminal 100 moves to the vicinity of a mart and then the wish list folder is open again, only the images of products available for purchase from the mart may be displayed among the images of products stored in the wish list folder.

For an embodiment, only the image 3120 of the second product and the image 3130 of the third product available for purchase at the mart may be displayed, but the image 3110 of the first product and the image 3140 of the fourth product may not be displayed.

It is based on the current location of the terminal 100 and when the terminal 100 moves to another place, the image 3110 of the first product and the image 3140 of the fourth product may be displayed again.

For another embodiment, visual information 3100 indicating the current location may be displayed. Specifically, when the terminal 100 is currently located at the mart, a mart-shaped icon or a mart name may be displayed next to the folder name.

For still another embodiment, when a product is purchased from a mart, total amount information 3150 to be paid may be displayed. Specifically, a total amount of products stored in the wish list compared with a total amount to be paid at the time of purchase at the mart may be displayed.

For yet still another embodiment, when a touch input is applied to the image 3130 of the third product, detailed information 3160 related to the third product may be displayed. Specifically, when the third product is a food item, the information 3160 may include the nutritional components, expiration date, recipe, sale price of the third product, and the like, of the third product available for sale at the mart.

For still yet another embodiment, when a touch input is applied to the image 3130 of the third product, information 3160 related to a product similar to the third product may be displayed. Specifically, when another food similar to the third product is currently being discounted at the mart, a message window 3170 indicating this may be displayed.

For yet still another example, the message window 3170 may be automatically displayed at the time of entering the mart or when it comes close to a place where the similar food is available for sale.

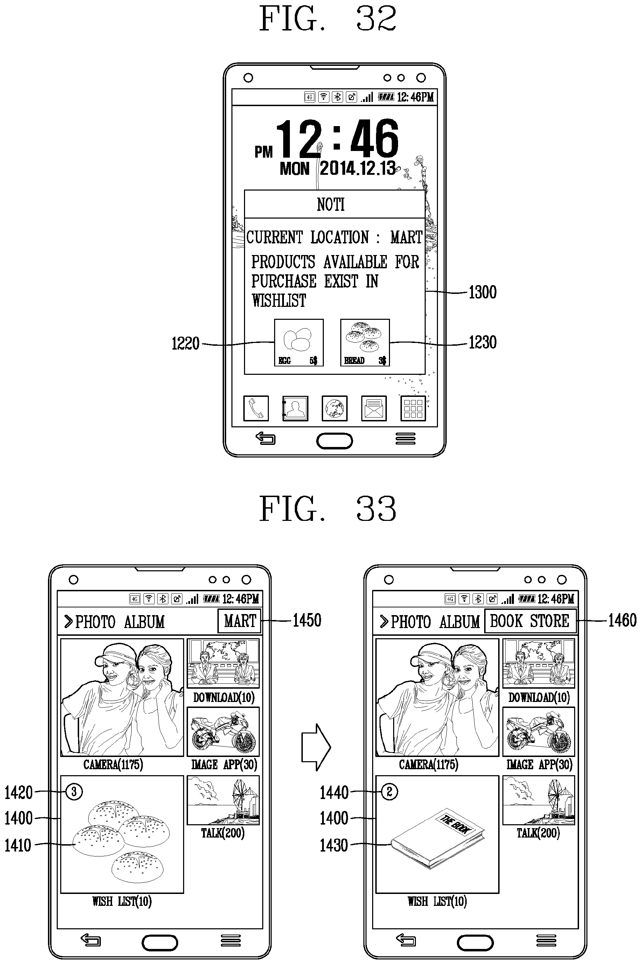

FIG. 32 is a conceptual view for explaining an embodiment in which a notification message window for notifying that a product available for purchase at a mart exists within a wish list folder is displayed when a terminal is located near the mart.

Referring to FIG. 32, when the terminal 100 is located near the mart, a current location thereof and a notification message window 1300 indicating that products available for purchase at a mart are stored in the wish list folder may be displayed in a pop-up manner.

For an embodiment, the notification message window 3200 may include images 3120, 3130 of products available for purchase at the mart.

In other words, the embodiment of FIG. 31 relates to a user interface in which a user opens a wish list folder when the terminal 100 is located near the mart, and FIG. 32 illustrates a user interface for automatically displaying a message window when the terminal 100 is located near the mart.

FIG. 33 is a conceptual view for explaining an embodiment in which a method of displaying an icon corresponding to a wish list folder is changed according to a location change of a terminal.

Referring to FIG. 33, when a touch input is applied to a photo album icon while the terminal 100 moves in the vicinity of the mart, an icon 3350 indicating that the terminal 100 is currently located near the mart may be displayed at the top of the folder name.

In addition, an image 3310 of a product available for purchase at the mart may be displayed as a representative image on an icon 3300 corresponding to the wish list folder.

For another embodiment, an image representing a mart may be displayed as a representative image on the icon 3300 corresponding to the wish list folder. The image representing the mart may include a general view of the mart or a logo of the mart.

For still another embodiment, a number 3320 of products available for purchase at the mart among products stored in the wish list folder may be displayed on the icon 3300 corresponding to the wish list folder.

If a touch input is applied to a photo album icon after the terminal 100 moves in the vicinity of a bookstore from the mart, an icon 3360 indicating that the terminal 100 is currently located near the bookstore may be displayed at the top of the folder name.

In addition, an image 3330 of a product available for purchase at the bookstore may be displayed as a representative image on an icon 3300 corresponding to the wish list folder.

For another embodiment, an image representing a bookstore may be displayed as a representative image on the icon 3300 corresponding to the wish list folder. The image representing the bookstore may include a general view of the bookstore or a logo of the bookstore.

For still another embodiment, a number 3340 of products available for purchase at the bookstore among products stored in the wish list folder may be displayed on the icon 3300 corresponding to the wish list folder.

On the other hand, the controller 180 may detect a product identical or similar to a product stored in the preset folder from the captured image, based on the occurrence of an event for capturing at least one product with a preset user input.

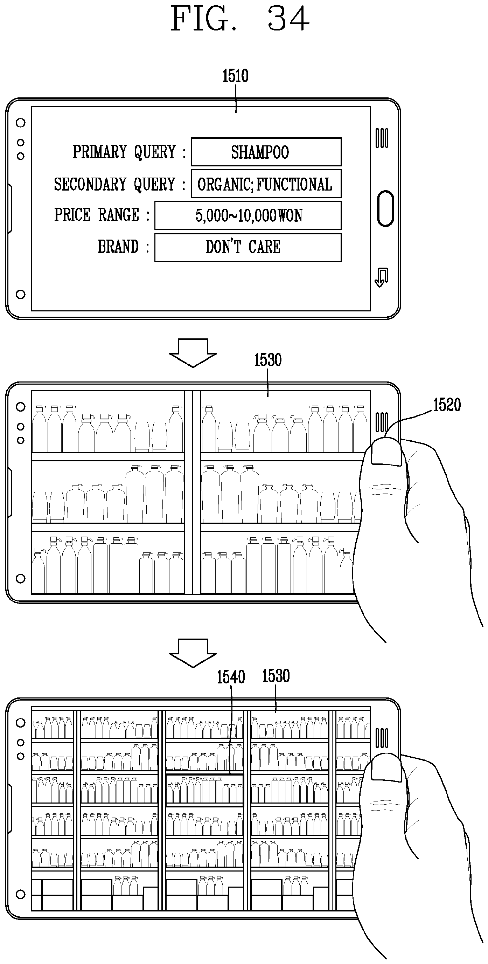

FIG. 34 is a conceptual view for explaining an embodiment for entering product information and then scanning product shelves with a camera to detect a location of a product to be purchased.

Referring to FIG. 34, a screen 3410 for entering information of a product to be purchased at a mart may be displayed. For an embodiment, when a touch input is applied to an icon of a purchase application, a screen 3410 for entering product information such as a search word, a price range, and a brand may be displayed.

Subsequently, the user may take a gesture to scan a product display shelf of the mart with the camera 121 while the touch input is applied to the fingerprint input unit 3420. For an embodiment, it may be possible to scan a product shelf by moving it in an up and down zigzag manner as if taking a panoramic image. At this time, the user's fingerprint may be input to the fingerprint input unit 3420 for authentication.

As a result, an image 3430 of the scanned product shelf may be displayed. When a product identical or similar to the product information entered by the user is detected on the image 3430 of the product shelf, the detected product 3440 may be displayed on the image 3430 of the product shelf.

According to an embodiment of FIG. 34, a user may easily find a product to be purchased in the product display shelf by a gesture of scanning the product shelf of the mart.

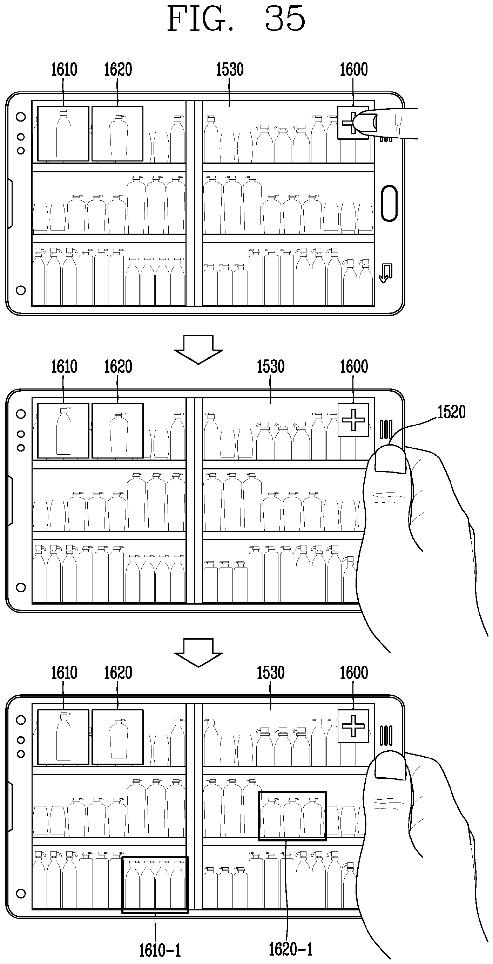

FIG. 35 is a conceptual view for explaining an embodiment for selecting a product within a wish list folder and then scanning product shelves with a camera to detect a location of a product to be purchased.

Referring to FIG. 35, a user may apply a touch input to an icon 3500 for loading a product image stored in the wish list folder while the image 3430 of the scanned product display shelf is displayed.

Accordingly, the images 3510, 3520 of the products to be purchased may be displayed. Specifically, when a touch input is applied to the icon 3500, an image 3510 of the first product may be displayed, and when a touch input is applied again to the icon 3500, an image 3520 of the second product may be displayed.

Subsequently, when a touch input is applied to the fingerprint input unit 3420, when products identical or similar to the first product and the second product among the images 3430 of the product display shelf is detected, the detected products 3510-1, 3520-1 may be displayed on the image 3430 of the product display shelf.

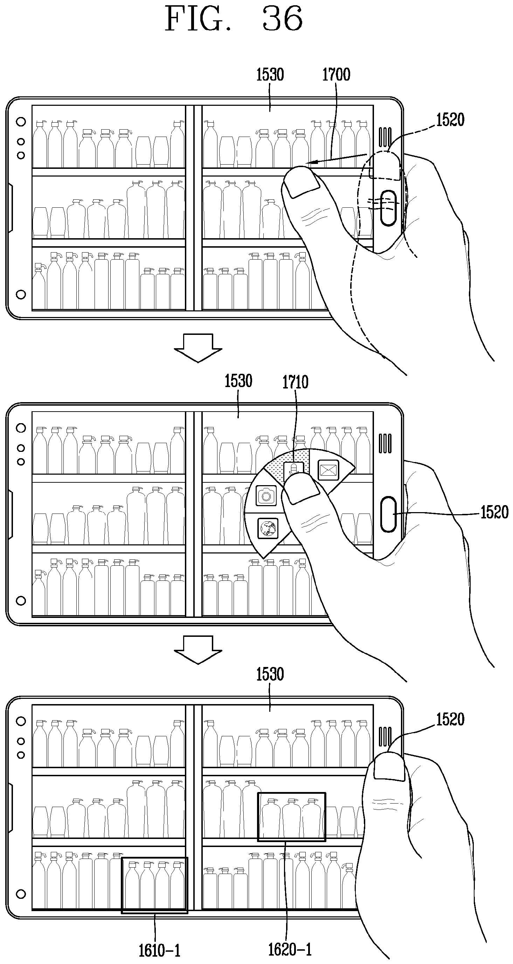

FIG. 36 is a conceptual view for explaining an embodiment for entering product information with a voice and then scanning product shelves with a camera to detect a location of a product to be purchased.

Referring to FIG. 36, a user may apply a touch input to the fingerprint input unit 3420 and then apply a drag input 3600 to an inside of the screen 151 while the image 3430 of the scanned product display shelf is displayed as illustrated in FIG. 34.

Accordingly, a tray containing an icon 3610 for executing a voice recognition function may be displayed, and the user may enter a voice input while a touch input is applied to the icon 3610. For example, product information such as a search word, a price range, and a brand of a product to be purchased may be entered with a voice input.

As a result, when products identical or similar to the product information entered by the user are detected on the image 3430 of the product shelf, the detected products 3510-1, 3520-1 may be displayed in real time on the image 3430 of the product shelf.

Meanwhile, for another embodiment, it may also be possible to check the purchase history of products that have been purchased among products stored in the wish list folder.

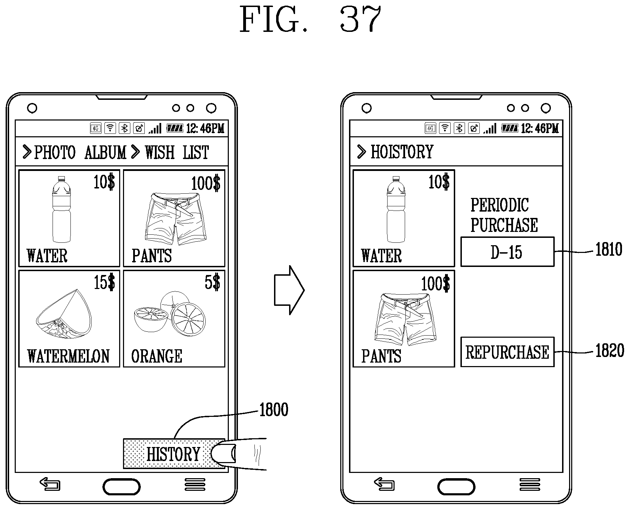

FIG. 37 is a conceptual view for explaining an embodiment in which a product purchase statement is displayed.

Referring to FIG. 37, when a touch input is applied to a history icon 3700 in the wish list folder, history information of products that have been paid among products stored in the wish list folder may be displayed.

For another embodiment, when a flicking input is applied into the wish list folder, the history information of the products that have been paid may be displayed at the bottom of the stored product image and product information.

A remaining number of days 3710 from an expected purchase date of a product to be periodically purchased may be displayed on the history information of the paid product. For still another embodiment, a repurchase icon 3720 capable of repurchasing a previously purchased product may be displayed.

On the other hand, a product that has been purchased periodically may be recommended to be quickly stored in the wish list folder.

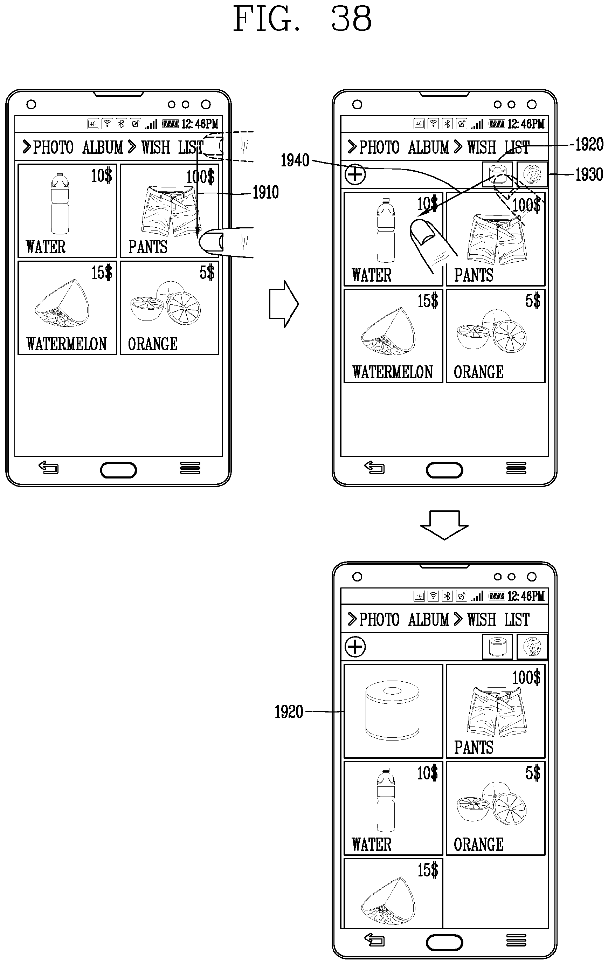

FIG. 38 is a conceptual diagram for explaining an embodiment storing a product to be purchased periodically in a wish list folder.

Referring to FIG. 38, when a downward drag input 3810 is applied to the top of the wish list folder, images 3820, 3830 of products to be periodically purchased may be displayed.

Subsequently, when a drag input 3840 to an inside of the wish list folder is applied to the product image 3820, the product image 3820 and product information on the product may be stored in the wish list folder.

For another example, when a user applies a touch input to the product image 3820, a user interface for entering a price, a quantity, a period of time to purchase periodically, and the like, desired to be purchased may be provided.

Meanwhile, the wish list folder is one of the folders in a photo album, and the user may edit the wish list folder.

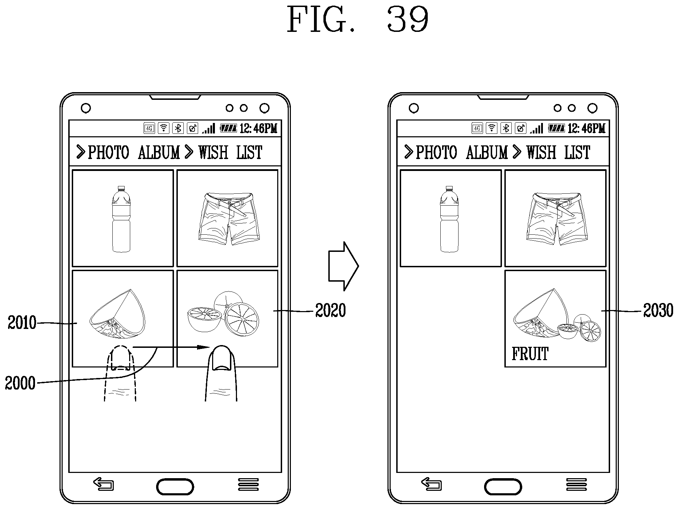

FIG. 39 is a conceptual view for explaining an embodiment of grouping products in a wish list folder.

Referring to FIG. 39, a user may touch a first product image 3910 in the wish list folder, and then apply a drag input 3900 to a second product image 3920. At this time, when the first product and the second product are the same or similar products, a product image 3930 in which the first product and the second product are grouped may be displayed.

For example, when the first product is a watermelon and the second product is oranges, a fruit image 3930 may be displayed as a group of the watermelon and the oranges. When a touch input is applied to the fruit image 3930, product information on the watermelon and the oranges may be displayed.

The effects of a mobile terminal according to the present disclosure and a control method thereof will be described as follows.

According to at least one of the embodiments of the present disclosure, there is an advantage that it is possible to confirm and then store product related information or purchase a product with an easy and quick input method.

According to at least one of the embodiments of the present disclosure, there is an advantage that product information produced by recognizing a user's face in consideration of the user's age, gender, and preferences can be recommended.

According to at least one of the embodiments of the present disclosure, there is an advantage that when the purchase of a good is completed or information related to the good is changed, it can be easily confirmed.

According to at least one of the embodiments of the present invention, there is an advantage that a product that can be purchased can be recommended based on the current position of the terminal.

For another embodiment, there is an advantage that a product to be purchased can be conveniently searched by a gesture such as scanning store shelves.

The foregoing present disclosure may be implemented as codes readable by a computer on a medium written by the program. The computer-readable media includes all types of recording devices in which data readable by a computer system can be stored. Examples of the computer-readable media may include ROM, RAM, CD-ROM, magnetic tape, floppy disk, and optical data storage device, and the like, and also include a device implemented in the form of a carrier wave (for example, transmission via the Internet). In addition, the computer may include the controller 180 of the electronic device. The foregoing embodiments are merely exemplary and are not to be considered as limiting the present disclosure. The scope of the invention should be determined by reasonable interpretation of the appended claims and all changes that come within the equivalent scope of the invention are included in the scope of the invention.

## Claims

1. A mobile terminal, comprising:
a display unit configured to display a preview image of a specific object in a camera photographing mode; and
a controller configured to enter a first mode for displaying a preview image focused on the specific object based on a preset 1-1 user input being applied, and displaying information related to the specific object based on a preset 1-2 user input being applied in the camera photographing mode, and enter a second mode for capturing the preview image, and then storing the captured image and the information related to the specific object in a preset folder, and displaying a plurality of captured images stored in the folder and information corresponding to each of the plurality of captured images based on a preset second user input being applied in the first mode, and enter a third mode for capturing the preview image, and then displaying screen information for purchasing the specific object based on a preset third user input being applied in the first mode.

2. The mobile terminal of claim 1, wherein the controller enters the first mode based on a touch input being applied to a region displayed with the specific object on the preview image of the specific object for a preset period of time in the camera photographing mode.

3. The mobile terminal of claim 2, wherein the controller displays price information on the specific object as information related to the specific object.

4. The mobile terminal of claim 3, wherein the controller displays price information on the specific object produced in consideration of the current location of the terminal as information related to the specific object, and displays a result of comparing price information disclosed in a site where the specific object is available for purchase and price information on the specific object based on a preset user input being applied.

5. The mobile terminal of claim 1, wherein the controller enters the second mode based on a touch input being applied to a photographing icon in the first mode.

6. The mobile terminal of claim 5, wherein the controller displays price information on a plurality of objects included in each of the plurality of captured images as information corresponding to each of the plurality of captured images.

7. The mobile terminal of claim 1, wherein the controller enters the third mode based on the authentication of a fingerprint input to the fingerprint input unit in the first mode.

8. The mobile terminal of claim 1, wherein the controller displays a preview image focused on the specific object and information related to the specific object in a first region of the display unit, and enters a fourth mode in which a plurality of captured images stored in the folder and information corresponding to each of the plurality of captured images are displayed in a second region of the display unit based on a preset fourth user input being applied in the camera photographing mode.

9. The mobile terminal of claim 8, wherein the controller captures the preview image, and then stores the captured image and information related to the specific object in the folder, and displays them in a second region of the display unit based on a preset fifth user input being applied in the fourth mode.

10. The mobile terminal of claim 9, wherein the controller displays a total sum of price information on a plurality of objects included in each of the plurality of captured images stored in the folder along with price information on the specific object in a first region of the display unit.

11. The mobile terminal of claim 8 or 10, wherein the controller displays screen information for purchasing the plurality of objects based on a preset sixth user input being applied in the fourth mode.

12. The mobile terminal of claim 1, wherein the controller captures a user, and then produces information related to the user from the captured image based on a preset seventh user input being applied in the first mode, and displays information related to the specific object produced based on the information related to the user.

13. The mobile terminal of claim 12, wherein the controller captures the user's face, and produces at least one of the user's age, gender and emotional state from the captured image as information related to the user based on the preset seventh user input being applied in the first mode.

14. A method of controlling a mobile terminal, the method comprising:
(a) entering a first mode for displaying a preview image focused on a specific object based on a preset 1-1 user input being applied, and displaying information related to the specific object based on a preset 1-2 user input being applied in a camera photographing mode;
(b) entering a second mode for capturing the preview image, and then storing the captured image and the information related to the specific object in a preset folder, and displaying a plurality of captured images stored in the folder and information corresponding to each of the plurality of captured images based on a preset second user input being applied in the first mode; and
(c) entering a third mode for capturing the preview image, and then displaying screen information for purchasing the specific object based on a preset third user input being applied in the first mode.

15. The method of claim 14, wherein the step (a) comprises entering the first mode based on a touch input being applied to a region displayed with the specific object on the preview image of the specific object for a preset period of time in the camera photographing mode.

16. The method of claim 15, wherein the step (a) comprises displaying price information on the specific object as information related to the specific object.

17. The method of claim 14, wherein the step (b) comprises entering the second mode based on a touch input being applied to a photographing icon in the first mode.

18. The method of claim 14, wherein the step (c) comprises entering the third mode based on the authentication of a fingerprint input to the fingerprint input unit in the first mode.

19. The mobile terminal of claim 1, wherein the controller displays visual information corresponding to a preset event based on the occurrence of the preset event in association with the specific object in the second mode.

20. The method of claim 14, wherein the step (b) comprises displaying visual information corresponding to a preset event based on the occurrence of the preset event in association with the specific object in the second mode.
